(19) **Europäisches Patentamt / European Patent Office / Office européen des brevets**

(11) **EP 3 778 989 A1**

(12) **EUROPEAN PATENT APPLICATION**
published in accordance with Art. 153(4) EPC

(43) Date of publication:
**17.02.2021 Bulletin 2021/07**

(21) Application number: **19780906.4**

(22) Date of filing: **03.04.2019**

(51) Int Cl.:
***C23C 24/04*** (2006.01)

(86) International application number:
**PCT/JP2019/014860**

(87) International publication number:
**WO 2019/194240 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2018 JP 2018071662**

(71) Applicant: **NIPPON STEEL CORPORATION**
**Chiyoda-ku**
**Tokyo 100-8071 (JP)**

(72) Inventors:
• **KIMURA, Keiichi**
  **Tokyo 100-8071 (JP)**
• **TOKUHASHI, Keisuke**
  **Tokyo 100-8071 (JP)**
• **UNO, Tomohiro**
  **Tokyo 100-8071 (JP)**
• **SATO, Yutaka**
  **Tokyo 100-8071 (JP)**
• **KOBAYASHI, Takayuki**
  **Tokyo 100-8071 (JP)**

(74) Representative: **Vossius & Partner**
**Patentanwälte Rechtsanwälte mbB**
**Siebertstrasse 3**
**81675 München (DE)**

(54) **COMPOSITE CERAMIC LAMINATE, AND MANUFACTURING METHOD THEREOF**

(57) Provided is a composite ceramic layered body, including: a substrate; and a composite ceramic that coats the substrate, the composite ceramic including a nitride phase and an oxide phase having an elastic modulus that differs from an elastic modulus of the nitride phase by 10% or more. The composite ceramic includes, among the nitride phase and the oxide phase, a first phase that occupies a largest area ratio, and a toughening phase that occupies an area ratio of 1% or more and has a largest difference in elastic modulus from an elastic modulus of the first phase. In a case in which the first phase is the nitride phase, the toughening phase is the oxide phase, and in a case in which the first phase is the oxide phase, the toughening phase is the nitride phase.

FIG. 3A

EP 3 778 989 A1

**(Cont. next page)**

# FIG. 3B

## Description

### Technical Field

The present disclosure relates to a composite ceramic layered body and a manufacturing method.

### Background Art

Ceramic layered bodies obtained by layering a substrate and a ceramic are used, in various fields, as structural materials (rolling rolls, transfer rolls, furnace walls, or the like) and functional materials (ceramic insulated circuit boards, or the like). Various ceramics are used depending on the application. In each application, in order to obtain excellent strength, fracture toughness, abrasion resistance, thermal conductivity, heat dissipation, insulation property, or the like, fine ceramics with particularly high purity and component management standards are used. Examples of fine ceramics include alumina ($Al_2O_3$), aluminum nitride (AlN), silicon nitride ($Si_3N_4$), and zirconia ($ZrO_2$). For example, Non-Patent Document 1 describes silicon nitride as a fine ceramic.

The idea of forming a composite structure to enhance strength and toughness is also adopted in ceramic materials. For example, composite ceramics having a two-phase structure by mixing alumina and zirconia are known (see Patent Document 1 and Patent Document 2).

Also, for example, Non-Patent Document 2 and Non-Patent Document 3 describe examples of sintering silicon nitride and zirconia.

### Citation List

#### Patent Documents

Patent Document 1: Japanese Patent Publication (JP-B) No. S59-24751
Patent Document 2: JP-B No. H08-13701

#### Non-Patent Documents

Non-Patent Document 1: S. Ogata et. al., Acta Meaterialia, 2004, Vol. 52, p. 233
Non-Patent Document 2: L. K. I. Falk et. al., J. Am. Ceram. Soc. 199, Vol. 75, p. 28
Non-Patent Document 3: P. Vincenzini et. al., Ceramics Internatioanl, 1986, Vol. 12, p. 133

### SUMMARY OF INVENTION

### Technical Problem

The composite ceramics as described in Patent Document 1 and Patent Document 2 have a microstructure in which a second phase having a low volume ratio is dispersed in a first phase having a high volume ratio. A typical one of these composite ceramics is a combination of alumina and zirconia, which is called alumina dispersed zirconia, zirconia dispersed alumina, zirconia reinforced alumina, or alumina reinforced zirconia. However, combinations of ceramic materials that can be made into composite materials are limited. In particular, in conventional ceramic materials, a heating step is indispensable for densification, as represented by a sintering method and a thermal spraying method. It is difficult to form composite ceramic materials in the case of a combination in which an oxide and a nitride react with each other due to heat of a heating process. Therefore, it is not possible to combine ceramic materials freely.

In particular, nitrides and oxides are characterized by a variety of mechanical, electrical, and thermal properties. When oxides and nitrides are mixed to form dense composite ceramics by a sintering method or a thermal spraying method, a high temperature of at least 1,300°C is required. Therefore, even if raw materials of nitrides and oxides are microcrystals, grains grow and oxides and nitrides react with each other to form oxynitrides. A composite ceramic that is a material in which a nitride phase and an oxide phase are microscopically composited has not been embodied so far. Furthermore, a composite ceramic layered body in which such a composite ceramic is jointed with a substrate has not been embodied so far, because of, for example, a reaction between the composite ceramic and the substrate or melting of the substrate in a process of forming the layered body.

In an example of sintering silicon nitride and zirconia as composite ceramics, as described in Non-Patent Document 2, it is shown that the structure of the raw material silicon nitride and zirconia cannot be maintained because a reactive phase such as $Si_2N_2O$ is formed by heating for densification. Further, as described in Non-Patent Document 3, it is shown that an oxidizable zirconium oxynitride is formed, by which cracks are induced.

As described above, conventional ceramic materials obtained by combining nitrides and oxides that have different physical properties from each other, especially those obtained by combining and sintering nitrides and oxides could not exhibit excellent physical properties, because the nitrides and the oxides reacted with each other.

Then, it was found that excellent physical properties can be obtained by finely and densely compositing a combined material of a nitride and an oxide having an elastic modulus that differs from an elastic modulus of the nitride. Furthermore, it was found that it is possible to form a fine and dense composite ceramic by aerosol deposition of a nitride raw material and an oxide raw material having an elastic modulus that differs from an elastic modulus of the nitride.

An object of the present disclosure is to provide a composite ceramic layered body, which is a layered body of a composite ceramic and a substrate, and has excellent fracture toughness, as well as a method of manufacturing a composite ceramic layered body.

Solution to Problem

The present disclosure includes the following aspects.

[1] A composite ceramic layered body, including:

a substrate; and
a composite ceramic that coats the substrate, in which:
the composite ceramic is a composite material including a nitride phase and an oxide phase having an elastic modulus that differs from an elastic modulus of the nitride phase by 10% or more, a balance of the composite ceramic being impurities, in which:

in a cross-section orthogonal to a contact interface between the composite ceramic and the substrate, among the nitride phase and the oxide phase, a phase that occupies a largest area ratio is a first phase and a phase that occupies an area ratio of 1% or more and has a largest difference in elastic modulus from an elastic modulus of the first phase is a toughening phase, and
in a case in which the first phase is the nitride phase, the toughening phase is the oxide phase, and in a case in which the first phase is the oxide phase, the toughening phase is the nitride phase.

[2] The composite ceramic layered body according to [1], in which, in the cross-section orthogonal to a contact interface between the composite ceramic and the substrate, voids having a long diameter of 0.1 $\mu$m or more are present in the composite ceramic at an area ratio of from 0% to 3%.

[3] The composite ceramic layered body according to [1] or [2], in which, in the cross-section orthogonal to a contact interface between the composite ceramic and the substrate, an average particle size of the toughening phase in a direction perpendicular to the contact interface is 1 $\mu$m or less.

[4] The composite ceramic layered body according to any one of [1] to [3], in which the first phase is a silicon nitride phase or an aluminum nitride phase.

[5] The composite ceramic layered body according to any one of [1] to [3], in which the first phase is a zirconia phase, an alumina phase, or a rare earth oxide phase.

[6] The composite ceramic layered body according to [5], in which a part of the zirconia phase has a tetragonal structure.

[7] The composite ceramic layered body according to any one of [1] to [5], in which a combination of the nitride phase and the oxide phase is: a combination of a silicon nitride phase and a zirconia phase; a combination of a silicon nitride phase and an alumina phase; a combination of a silicon nitride phase and a rare earth oxide phase; a combination of an aluminum nitride phase and a zirconia phase; a combination of an aluminum nitride phase and an alumina phase; or a combination of an aluminum nitride phase and a rare earth oxide phase.

[8] The composite ceramic layered body according to [7], in which a part of the zirconia phase has a tetragonal structure.

[9] The composite ceramic layered body according to any one of [1] to [8], in which the substrate is a metal substrate.

[10] A method of manufacturing a ceramic layered body, the method including:

a step of preparing a mixed raw material in which nitride raw material particles, and oxide raw material particles having an elastic modulus that differs from an elastic modulus of the nitride raw material particles by 10% or more, are mixed; and
a step of mixing a gas with the mixed raw material to produce an aerosol, and jetting the aerosol toward a substrate.

Advantageous Effects of Invention

According to the present disclosure, a composite ceramic layered body, which is a layered body of a composite ceramic and a substrate, and has excellent fracture toughness, as well as a method of manufacturing a composite ceramic layered body are provided.

The composite ceramic layered body of the present disclosure can be realized, by layering a composite ceramic with high fracture toughness, as a ceramic layered body that is difficult to break under thermal and mechanical loads (accordingly, as a highly reliable ceramic layered body).

BRIEF DESCRIPTION OF DRAWINGS

Fig. 1A is a diagram showing one example of an embodiment of the composite ceramic layered body of the present disclosure.

Fig. 1B is a diagram showing another example of an embodiment of the composite ceramic layered body of the present disclosure.

Fig. 1C is a diagram showing another example of an embodiment of the composite ceramic layered body of the present disclosure.

Fig. 1D is a diagram showing another example of an embodiment of the composite ceramic layered body of the present disclosure.

Fig. 2A is a diagram showing one example of an observation surface of the composite ceramic and an orientation of lines for evaluating particle size by an intersection method within the observation surface in the composite ceramic layered body of the present disclosure.

Fig. 2B is a diagram showing another example of an observation surface and an orientation of lines for evaluating particle size by an intersection method within the observation surface in the composite ceramic of the present disclosure.

Fig. 3A is an explanatory diagram of one example of microstructure of the composite ceramic of the present disclosure and an evaluation method of crystal grain by an intersection method.

Fig. 3B is an explanatory diagram showing a caliper diameter of a void in a case in which the void is present in the composite ceramic of the present disclosure.

Fig. 4 is a cross-section photograph of a cross-section of the composite ceramic layered body of Sample 21 observed with a transmission electron microscope.

DESCRIPTION OF EMBODIMENTS

One example of a preferable aspect of the present disclosure will be described in detail below.

The composite ceramic layered body of the present disclosure includes a substrate and a composite ceramic that coats the substrate. The composite ceramic is a composite material including a nitride phase and an oxide phase having an elastic modulus that differs from an elastic modulus of the nitride phase by 10% or more, a balance of the composite material being impurities.

In a cross-section orthogonal to a contact interface between the composite ceramic and the substrate, among the nitride phase and the oxide phase, a phase that occupies a largest area ratio is a first phase, and a phase that occupies an area ratio of 1% or more and has a largest difference in elastic modulus from an elastic modulus of the first phase is a toughening phase.

In a case in which the first phase is the nitride phase, the toughening phase is the oxide phase, and in a case in which the first phase is the oxide phase, the toughening phase is the nitride phase.

(Description of Terms)

As used herein, the term "composite ceramic layered body" refers to a structure that encompasses an embodiment in which a composite ceramic is coated on a substrate.

As used herein, the term "composite ceramic" refers to a state in which a nitride and an oxide are mixed and bound with each other with a particle size of about 100 μm or less to be microscopically multiphased.

As used herein, the term "contact interface" refers to a coating interface between a substrate and a composite ceramic that coats the substrate.

As used herein, the term "a nitride phase and an oxide phase having an elastic modulus that differs from an elastic modulus of the nitride phase by 10% or more" means that a value in terms of percentage, which is obtained by dividing an absolute value of the difference between an elastic modulus of the first phase and an elastic modulus of the toughening phase by the elastic modulus of a phase that is lower in elastic modulus among the first phase and the toughening phase, is 10% or more. In other words, the term means a nitride phase (or an oxide phase), and an oxide phase (or a nitride phase) having an elastic modulus that differs from an elastic modulus of the nitride phase (or the oxide phase) by 10% or more, and means that the following Formula 1 is satisfied. Since the area ratio of the toughening phase is 1% or more, the maximum area ratio of the first phase is 99%.

$$(\text{Formula 1}) \quad \{|\text{"elastic modulus of first phase" - "elastic modulus of toughening phase"}| / \text{"elastic modulus of a phase that is lower in elastic modulus among first phase and toughening phase"}\} \times 100 \geq 10\%$$

As used herein, the term "elastic modulus" refers to a longitudinal elastic modulus (accordingly, Young's modulus) of a polycrystal.

As used herein, the term "impurities" refer to a small phase derived from impurities that are inevitably present, an amorphous phase formed thinly at grain boundaries, and an oxynitride phase.

In the present disclosure, in a case in which the first phase is a nitride phase, the toughening phase is an oxide phase. In a case in which the first phase is an oxide phase, the toughening phase is a nitride phase.

As used herein, the term "second phase" refers to a phase that occupies a second largest area ratio of the first phase in the composite ceramic. In other words, the phases are referred to as "first phase", "second phase", and "third phase" in descending order of area ratio.

As used herein, the term "particle size" refers to a size of each phase as determined by an intersection method described below, which is distinguished from a crystallographic crystal grain size.

In the present disclosure, a numerical range represented by "(from) X to Y" means a range including numerical values described before and after "to" as a lower limit value and an upper limit value , respectively.

As used herein, the term "step" includes not only an independent step but also a step that is not clearly distinguishable from another step, as long as the intended purpose of the step is achieved.

As used herein, the term "normal temperature" or "room temperature" means a temperature in a range of 20°C ± 15°C (accordingly, from 5°C to 35°C). This temperature is an average temperature of a substrate during deposition. It is undeniable that, at the moment a raw material powder collides, the temperature of a substrate has microscopically exceeded the temperature due to impact of the collision. However, heat generated in a very small area of the substrate is instantly dissipated and the temperature of the entire substrate is kept at room temperature (accordingly, a temperature in the range above).

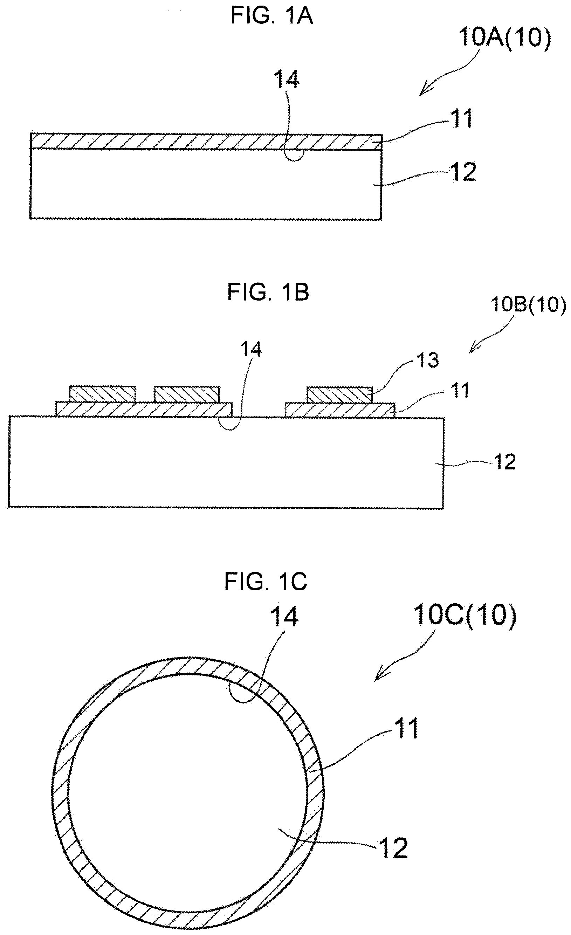

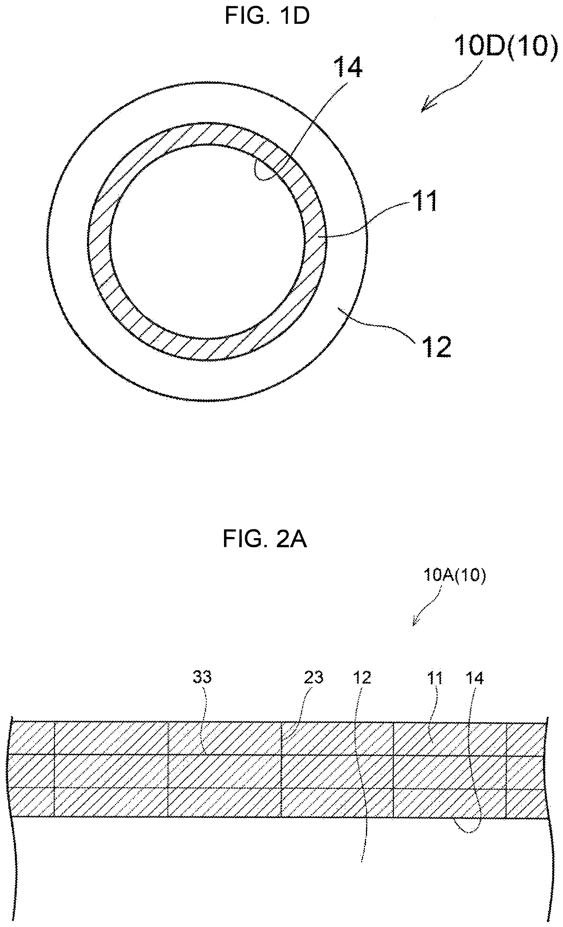

The composite ceramic layered body of the present disclosure, for example, includes the following aspects. The composite ceramic may be coated on one of the surfaces facing a thickness direction of the substrate. The composite ceramic may be coated entirely on one surface (see Fig. 1A). The composite ceramic may be coated partially on one surface (see Fig. IB). The composite ceramic may be coated on both of the surfaces facing a thickness direction of the substrate. Furthermore, another material (such as metal) other than a composite ceramic may be formed on the composite ceramic (see Fig. 1B). The substrate may be a flat plate, or may have a curved surface such as a circular column or a cylinder. The composite ceramic may be coated on an outer circumference surface of a circular column (see Fig. 1C), or may be coated on an inner circumference surface of a cylinder (see Fig. 1D). The present disclosure is not limited to these aspects, and the composite ceramic may be coated on a side surface (a surface in a thickness direction) of the substrate. Each surface of the substrate may be coated entirely or partially. Furthermore, the substrate may be coated with different composite ceramics at different locations. The different composite ceramics may be coated in a form of multiple layers.

Each of Figs. 1A to 1D is a diagram showing another example of an embodiment of the composite ceramic layered body of the present disclosure. Each of Figs. 1A to 1D shows a cross-section of a composite ceramic layered body 10, the cross-section being perpendicular to a contact interface 14 between a composite ceramic 11 and a substrate 12. In the composite ceramic layered body 10A, one surface of a flat plate substrate 12 is coated with a composite ceramic 11. In the composite ceramic layered body 10A, the composite ceramic 11 is coated entirely on one surface of the substrate 12. In the composite ceramic layered body 10B, one surface of a flat plate substrate 12 is coated with a composite ceramic 11, and the composite ceramic 11 is coated with a material 13 different from the composite ceramic 11. Examples of the different material 13 include a material such as copper or aluminum. Furthermore, the material may be subjected to a plating treatment with a material such as nickel or palladium. In the composite ceramic layered body 10B, the composite ceramic 11 is coated partially on one surface of the substrate 12. In the composite ceramic layered body 10C, a composite ceramic 11 is coated entirely on an outer circumference surface of a cylindrical substrate 12. In the composite ceramic layered body 10D, a composite ceramic 11 is coated entirely on an inner circumference surface of a cylindrical substrate 12. The composite ceramic layered body of the present disclosure is not limited to the aspects illustrated in Figs. 1A to 1D.

The observation surface for evaluating the structure of the composite ceramic in the composite ceramic layered body of the present disclosure is a cross-section perpendicular to a contact interface between the substrate and the composite ceramic. When the composite ceramic layered body is a ceramic layered body in which a circumference surface of a circular columnar or cylindrical structure as a substrate is coated with the composite ceramic (for example, transfer rolls, rolling rolls, or the like), a given cross-section on a plane perpendicular to the central axis of the circular column or the cylinder as a substrate is evaluated as an observation surface. The reason for specifying the observation surface is that in a case in which the composite ceramic has anisotropic structure, evaluation results may vary depending on the observation cross-section. An anisotropy of the microstructure may have a favorable effect on the mechanical and thermal reliability of the composite ceramic layered body. A given cross-section refers to a cross-section within an inner side at 1 mm or more from an outer edge (an edge of a coating perpendicular to a contact interface) of a composite ceramic that is coated onto a substrate. In other words, a given cross-section represents a cross-section that is orthogonal to a contact interface of a substrate and a composite ceramic, and that is within an inner side at 1 mm or more from an outer edge of a composite ceramic that is provided onto a substrate. In this cross-section, a vicinity of the center of the composite ceramic in the thickness direction is observed.

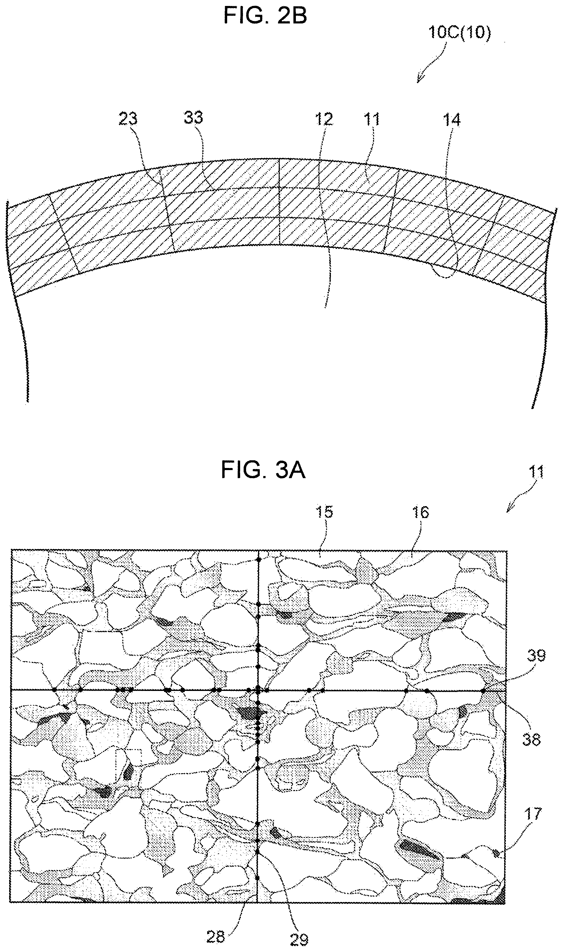

For measurement of particle size in the present disclosure, an intersection method is used on the observation surface described above. The intersection method is explained with reference to the drawings. Here, the observation surface and the direction of a line by the intersection method are described. The specific measurement method is described below. Each of Figs 2A and 2B shows an example of an observation surface of a composite ceramic in the composite ceramic layered body of the present disclosure and an example of the direction of a line for evaluating particle size by the intersection method within the observation surface. Fig. 2A shows an observation surface of the composite ceramic layered body 10A, and Fig. 2B shows an observation surface of the composite ceramic layered body 10C. Specifically, as shown in respective Figs. 2A and 2B, in the intersection method, a line 23 in a direction perpendicular to the contact interface 14 and a line 33 in a direction parallel to the contact interface 14 are initially drawn in a cross-section orthogonal to the contact interface 14 of the composite ceramic 11 and the substrate 12. Then, the particle size is specified by an average of lengths of intersections between grain boundaries, and the line 23 or the line 33.

In the observation surface, the line 23 perpendicular to the contact interface 14 is a straight line, even if the composite ceramic layered body 10 is whether a flat plate or a circular column or a cylinder. In a case in which the substrate of the composite ceramic layered body is a circular column or a cylinder and the circumference surface thereof is coated, the line 33 parallel to the contact interface 14 becomes an arc as shown by the solid line in Fig. 2B. Note that, in the present disclosure, the microstructure of the composite ceramic is fine, and the size of the observation surface is also small compared to the size of the composite ceramic layered body 10. For this reason, an approximate straight line may be drawn within the observation surface on which the evaluation is performed.

(Morphology of Present Disclosure: [1])

The composite ceramic layered body of the present disclosure has excellent toughness (accordingly, high mechanical and thermal reliability) as a whole. For this, in the composite ceramic constituting the composite ceramic layered body of the present disclosure, a nitride and an oxide are microscopically composited. Here, the term "microscopically" refers to a multiphase state with a particle size of approximately 100 $\mu$m or less. A layered body of a microscopically composited ceramic and a substrate exhibits a form in which the substrate is coated with the ceramic with a size of approximately one millimeter or more in terms of a length at a contact interface. When representing the microscopic structure of a nitride and an oxide in a composite ceramic, the nitride and the oxide are represented as a nitride phase and an oxide phase, respectively. A phase in which two or more phases of the nitride phase or the oxide phase are multiphased is represented as a composite ceramic phase. By coating a substrate with the microscopically composited composite ceramic described above, it is expected to realize a highly reliable composite ceramic layered body which is difficult to break under external stress and thermal stress (accordingly, thermal load) that is an internal stress caused by difference in coefficient of thermal expansion of the substrate and the composite ceramic associated with increase or decrease in temperature.

The reason why a nitride and an oxide are selected as materials to constitute a composite ceramic is that a nitride and an oxide are often superior in strength. Since a nitride and an oxide have a wide distribution in Young's modulus and coefficient of thermal expansion, a composite ceramic layered body with excellent fracture toughness is realized by microscopically multiphasing the nitride and the oxide. A metal nitride or a metal oxide that includes a semi-metal such as silicon often has high insulating property, and makes it possible to produce an excellent layered body for use as an insulated heat dissipating board, for example. In addition, these materials make it possible to produce a chemically stable and corrosion resistant composite ceramic layered body, and some of these materials also have catalytic properties, and therefore, a ceramic layered body that includes, in a composite ceramic phase, a nitride phase as a catalyst support and an oxide phase as a catalyst can be expected to be produced, for example. A composite ceramic layered body with high mechanical and thermal reliability is expected to be realized by selecting an appropriate combination of the nitride and the oxide.

The nitride and the oxide are not particularly limited. In the composite ceramic layered body of the present disclosure, a nitride and an oxide used for engineering ceramics, which require mechanical properties, are suitable as materials constituting the composite ceramic. Specific examples of the nitride include silicon nitride ($Si_3N_4$) and aluminum nitride (AlN). Examples of the oxide include zirconium oxide ($ZrO_2$), aluminum oxide ($Al_2O_3$), magnesia (MgO), silica ($SiO_2$), titania ($TiO_2$), calcia (CaO), and a rare earth oxide. Examples of the rare earth oxide include yttria ($Y_2O_3$) and ceria ($CeO_2$). The nitride and the oxide used in combination are not limited to one kind, respectively. If necessary, the nitride and the oxide may be two or more kinds selected from the group consisting of the nitrides and the oxides, respectively.

The rare-earth oxide, such as $Y_2O_3$ and $CeO_2$, has plasma resistance and catalytic property and is useful as an oxide constituting the composite ceramic. A composite ceramic layered body including a composite ceramic that is constituted with $CeO_2$ and $Si_3N_4$ can be used as a polishing member for a dresser, or the like.

In order to improve mechanical reliability of the composite ceramic layered body, it is important to improve the toughness, which is the greatest challenge of the ceramic material. A microscopic composite of materials with different elastic modulus causes microscopic change in the stress field within the ceramic material. As a result, a crack deflection effect, in which cracks do not go straight through the ceramic material but extend in zigzag manner, is realized and the fracture toughness of the ceramic material can be increased. In order to increase the fracture toughness of the ceramic material, elastic modulus of the nitride and the oxide constituting the composite ceramic differs from each other, and a ratio of the elastic modulus expressed by the Formula 1 described above is 10% or more on the basis of the smaller phase among the constituent phases. Preferably, the ratio of the elastic modulus differs by 20% or more. The ratio of the elastic modulus may be 1,000% or less, taking into account that if the ratio is too large, the ceramic material may break due to internal stress.

The elastic modulus is a three-dimensional one expressed as longitudinal modulus, transverse modulus, Poisson's ratio, or tensor in nature. In the present disclosure, the elastic modulus is specified as the longitudinal modulus (accordingly, Young's modulus) of a polycrystal. Young's modulus varies depending on density of even the same material. In the present disclosure, the value of a polycrystal having a density of 97% or more with respect to the theoretical density is used as Young's modulus. For example, the representative values of Young's modulus of $Al_2O_3$, $ZrO_2$, $Y_2O_3$, $CeO_2$, MgO, $SiO_2$, $TiO_2$, $\beta$-$Si_3N_4$, and AlN, respectively, are as follows. Representative values of Young's modulus are 370 GPa ($Al_2O_3$), 220 GPa ($ZrO_2$), 160 GPa ($Y_2O_3$), 170 GPa ($CeO_2$), 240 GPa (MgO), 80 GPa ($SiO_2$), 300 GPa ($TiO_2$), 290 GPa ($\beta$-$Si_3N_4$), and 310 GPa (AlN). Those in parentheses indicate nitrides or oxides corresponding to the Young's modulus. A value of 338 GPa is used for $\alpha$-$Si_3N_4$, the value being calculated from Non-Patent Document 1, because it is difficult to produce a dense material by a general method. Note that a Young's modulus of $\beta$-$Si_3N_4$ according to this document is 288 GPa. Zirconia may include zirconia in a form of a cubic, tetragonal, or monoclinic crystal or the like as defined in the present disclosure. In any form, the above Young's modulus can be applied.

In a case in which voids are present in the composite ceramic, the voids contribute to improvement of the toughness as long as the voids are fine and present below a certain volume ratio. However, large voids are undesirable because such voids reduce the strength and the toughness. In the composite ceramic layered body of the present disclosure, although the composite ceramic is a composite material of the nitride and the oxide, it is preferable that voids having a long diameter of 0.1 $\mu$m or more are not present or are slightly present even if they are present. In other words, it is preferred that voids having a long diameter of 0.1 $\mu$m or more, which cause decrease in the fracture toughness, are present in the composite ceramic at an area ratio of from 0% to 3% within the observation surface as specified in the present disclosure. In other words, the composite ceramic of the present disclosure is dense to an extent satisfying the above-described porosity. Ideally, fine voids may be present at a ratio of 3% or less. Voids having a long diameter of 0.1 $\mu$m or more may be present at an area ratio of more than 0% and 3% or less. The voids having a long diameter of 0.1 $\mu$m or more may be present at an area ratio of 0.05% or more, or 0.1% or more. The voids having a long diameter of 0.1 $\mu$m or more may be present at an area ratio of 2% or less, 1% or less, 0.5% or less, or 0.1% or less.

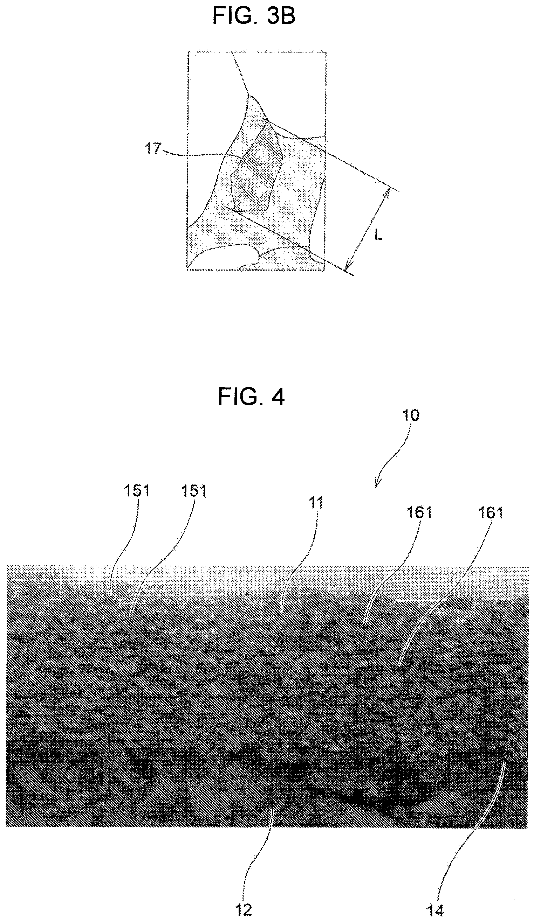

The long diameter of a void is the largest diameter of a caliper diameter as measured across the void from various directions. Referring to Fig. 3B, Fig. 3B is an explanatory diagram representing the caliper diameter of a void in a case in which the void is present in the composite ceramic of the present disclosure. As shown in Fig. 3B, a long diameter L is the length of the longest portion of a void 17 and is expressed as the largest diameter of the caliper diameter. As shown in Fig. 3A, the caliper diameter is determined from a length obtained by sandwiching the longest portion of the subject void 17 that is present in the microstructure of the composite ceramic 11. The reason for adopting the long diameter is that a sharp void with a large aspect ratio causes decrease in the toughness of the composite ceramic. For this reason, the measurement is preferably carried out taking into account voids having a long diameter of 0.1 $\mu$m or more.

In consideration of the size of a void specified in the present disclosure, a recessed portion of a mirror-polished observation surface when observed with a scanning electron microscope with a resolution of 0.1 $\mu$m or more at a magnification of 20,000 times is regarded as a void, and the size of the void is determined. It is preferable that an area ratio of the void having a long diameter of 0.1 $\mu$m or more, which is the largest caliper diameter of the recessed portion, is from 0% to 3% as a ratio with respect to the field of view for observation. The broader an area to be evaluated, the closer the void size is to an average value of the ceramic material, and therefore, it is desirable that the larger the number of field of view for observation. It is preferable to increase the number of field of view for observation until the value converges to a certain value. In the present disclosure, the area ratio of voids having a long diameter of 0.1 $\mu$m or more is an average value obtained by observing, at a magnification of 20,000 times, five or more fields of view of a scanning electron microscope image.

In the composite ceramic layered body of the present disclosure, the nitride and the oxide constituting the composite ceramic are selected to improve the properties as the layered body by utilizing their respective excellent properties and microscopically compositing them. Therefore, it is not desirable for the nitride and the oxide to react with each other.

In a case in which a generally formed reactive phase, such as an oxynitride phase, is present at an interface between the oxide phase and the nitride phase constituting the microstructure of the composite ceramic, the strength and toughness are often degraded depending on the physical property of the oxynitride phase. For this reason, in the present disclosure, a phase that is different from the nitride phase and the oxide phase is not present at a typical interface between the nitride phase and the oxide phase. Alternatively, even when a phase that is different from the nitride phase and the oxide phase is present, the thickness thereof at the interface between the oxide phase and the nitride phase is 0.1 $\mu$m or less.

In other words, in the composite ceramic layered body of the present disclosure, a reactive phase resulting from reaction and growth in a case in which the nitride and the oxide are thermally densified and multiphased at a high temperature as in a sintering method, is unacceptable. In other words, a newly generated reaction phase that is not intentionally added as a raw material is unacceptable. In the composite ceramic of the present disclosure, a small phase derived from impurities that have been inevitably present at a surface and an inside of the raw material nitride and at a surface and an inside of the raw material oxide, an amorphous phase formed thinly at grain boundaries, and an oxynitride phase, are thin and are not present in large quantities, respectively (impurities are generally less than 3% by volume at most). Since, in the present disclosure, the area ratio of the evaluation surface specified is used as a volume ratio, impurities are present at less than 3% in terms of area ratio of the cross-section specified in the present disclosure. Impurities are acceptable because they do not significantly affect the properties of the composite ceramic layered body.

The method for evaluating impurities is as follows. First, the observation surface specified in the present disclosure is mirror polished. Next, the interface between the nitride phase and the oxide phase is observed with a scanning electron microscope or transmission electron microscope with a resolution of 0.1 $\mu$m or less at a magnification of 10,000 times or more. As a result of observation of the interface between the nitride phase and the oxide phase, it is acceptable if a thickness of a phase that is different from the nitride phase and the oxide phase is 0.1 $\mu$m or less at 9 interfaces out of 10 interfaces. In other words, at typical grain boundaries, it is acceptable that a small phase derived from impurities that have been inevitably present at a surface and an inside of the raw material nitride and at a surface and an inside of the raw material oxide, an amorphous phase formed thinly at grain boundaries, and an oxynitride phase have a thickness of 0.1 $\mu$m or less, respectively. Examples of impurities (accordingly, a small phase derived from impurities that have been inevitably present, an amorphous phase formed thinly at grain boundaries, and an oxynitride phase) include the following. Examples of impurities include metal oxides, nitrides, and oxynitrides, which are different from the raw material inevitably contained in the raw material. Examples thereof include carbon, contamination (for example, iron) incorporated from media, containers, or the like during the manufacture of the raw material powder, or the like, and those derived from an oxide layer that is present at a surface of the raw material nitride.

A ratio of the oxide phase and the nitride phase in the composite ceramic of the present disclosure should be determined according to intended applications, and is not particularly limited. Preferably, the ratio is favorable such that a combined effect is effectively achieved by utilizing difference in physical properties of the nitride and the oxide that constitute the oxide phase and the nitride phase, respectively. Regarding the ratio of the oxide and nitride phases, it is preferable that the oxide phase/the nitride phase is from 1%/99% to 99%/1% in terms of volume ratio. The volume ratio of the oxide and nitride phases is a ratio of the entire nitride phase and the entire oxide phase. In the present disclosure, the area ratio of the specified evaluation surface is used as the volume ratio. To measure the area ratio, a phase of interest is extracted by image processing using difference in brightness obtained by a scanning electron microscope, and the area ratio thereof is calculated. In the present disclosure, observation is carried out using a scanning electron microscope with a resolution of 0.1 $\mu$m or more at a magnification of from 5,000 to 50,000 times, and an average of five or more images with different fields of view is used. The observation magnification may be determined by considering the size of a phase of interest. EDS (energy-dispersive X-ray spectrometer) is used to confirm each of the oxide phase and the nitride phase. In a case in which a scanning electron microscope does not provide difference in brightness, a transmission electron microscope may be used.

A microscopic morphology of the nitride phase and the oxide phase in the composite ceramic of the present disclosure is not limited. When one phase is less than the other phase, the lesser phase is usually dispersed in a matrix of the greater phase. There may be also a morphology in which one phase is present so as to fill in an inter-grain space between the binding particles that constitute the other phase. Specific examples include a complex morphology as shown in Fig. 3A.

Fig. 3A is an explanatory diagram of one example of a microstructure of the composite ceramic of the present disclosure and an evaluation method of a crystal grain by an intersection method. Fig. 3A shows a microstructure of the composite ceramic 11 when observing a cross-section perpendicular to the contact interface 14 between the composite ceramic 11 and the substrate 12. As shown in Fig. 3A, the composite ceramic 11 includes a nitride phase 15, an oxide phase 16, and a void 17. The microstructure of the composite ceramic 11 shown in Fig. 3A is a two-component type that includes one kind of nitride phase and one kind of oxide phase. In the composite ceramic 11 shown in Fig. 3A, the nitride phase 15 occupies a largest area ratio among the nitride phase 15 and the oxide phase 16. The area ratio of the oxide phase 16 is less than the area ratio of the nitride phase 15.

In the present disclosure, a phase that occupies a largest area ratio in the composite ceramic is a first phase. A phase that occupies a second largest area ratio of the first phase is a second phase. Hereafter, the phases are referred to as a third phase and a fourth phase in descending order of area ratio. Therefore, the nitride phase 15 is the first phase. Since the oxide phase 16 has an area ratio less than the area ratio of the nitride phase 15, the oxide phase is the second phase. The oxide phase 16 occupies an area ratio of 1% or more, and exhibits a largest difference in elastic modulus from an elastic modulus of the first phase. Therefore, the oxide phase 16 is the toughening phase. In other words, the oxide phase 16 as the second phase is also the toughening phase. As described above, in the present disclosure, the second phase may be the same phase as the toughening phase in the composite ceramic. In the composite ceramic layered body of the present disclosure, the structure of the composite ceramic is not limited to the structure shown in Fig. 3A described above.


(Morphology of Present Disclosure: [2])


The composite ceramic used in the present disclosure may be one which is constituted by the nitride phase and the oxide phase and which has not been realized before, and is densely composited. In order to achieve excellent fracture toughness, which is an effect obtained by compositing them, it is desirable that they are microscopically composited. With respect to each of perpendicular direction and parallel direction to the contact interface between the composite ceramic and the substrate, an average particle size of the composite ceramic phase is desirably 1 $\mu$m or less, and is more desirably 0.5 $\mu$m or less. The average particle size of the composite ceramic phase may be 0.1 $\mu$m or less, and may include crystal grains of 0.005 $\mu$m or less, which can be observed with a transmission electron microscope. The average particle size of the composite ceramic phase is the average particle size of the entire oxide and nitride phases. A lower limit of the average particle size may be 0.005 $\mu$m or more, which is a size of an assembly of about 1,000 unit cells of the nitride or the oxide. An average particle size of the oxide phase and an average particle size of the nitride phase may be 1 $\mu$m or less, 0.5 $\mu$m or less, 0.1 $\mu$m or less, or 0.005 $\mu$m or more, respectively.

As described above, in the present disclosure, the composite ceramic is more desirable to be micronized in all phases that constitute the composite ceramic. Since toughening of the composite ceramic, which is an object of the present disclosure, can be achieved mainly by presence of the toughening phase, it is preferable that the toughening phase is at least micronized. A preferable range of each of the average particle size of the oxide phase and the average particle size of the nitride phase may vary depending on the combination of the oxide phase and the nitride phase, the volume ratio (the area ratio) of the toughening phase, or the like.

In other words, the average particle size of the toughening phase in a direction perpendicular to the contact interface in a cross-section orthogonal to the contact interface of the composite ceramic and the substrate is preferably 1 $\mu$m or less. It is also preferable that the average particle size of each phase other than the toughening phase (each phase other than the toughening phase, such as the first phase) in a direction parallel to the contact interface is 1 $\mu$m or less. The average particle size of the toughening phase may be 0.5 $\mu$m or less, or 0.1 $\mu$m or less. The average particle size of the each phase may be 0.5 $\mu$m or less, or 0.1 $\mu$m or less. A lower limit of the average particle size of each of the toughening phase and the second phase defined here may be 0.005 $\mu$m or more.

In the present disclosure, an intersection method is adopted as the method for determining the average particle size of each phase including the toughening phase described above. Specifically, the average particle size is determined as follows (see Fig. 3A). As shown in Fig. 3A, a given cross-section orthogonal to the contact interface between the composite ceramic and the substrate is regarded as an observation surface. Then, the observation surface is mirror-polished in such a manner that grain boundaries can be identified. Next, a line is drawn on each of a straight line 28 in a direction perpendicular to the contact interface, and a straight line 38 in a direction parallel to the contact interface. Next, at an intersection 29 where the drawn line 28 intersects grain boundaries, a length between adjacent intersections 29 is measured. Similarly, at an intersection 39 where the drawn line 38 intersects grain boundaries, a length between adjacent intersections 39 is measured. An average value of the measured lengths is defined as the average particle size. Note that edges of the image and the interface with voids are excluded. The average particle size is determined by distinguishing between the direction perpendicular to the contact interface and the direction parallel to the contact interface. A given cross-section refers to a cross-section that is within an inner side at 1 mm or more from an outer edge of a composite ceramic that is provided onto a substrate. For example, the average particle size in the toughening phase in a direction perpendicular to the contact interface can be obtained as follows. In the microstructure of the composite ceramic shown in Fig. 3A, the oxide phase 16 corresponds to the toughening phase, as described above. Accordingly, the average particle size in the toughening phase in a direction perpendicular to the contact interface is obtained from, regarding intersections 39 between the straight line 38 and the oxide phase 16, an average value of lengths between adjacent intersections 39 in the oxide phase 16. When measuring particle size, observation is carried out using a scanning electron microscope with a resolution of 0.1 $\mu$m or more at a magnification of from 5,000 to 50,000 times, and at least 20 particles (preferably 30 or more) are measured in order to calculate the average particle size. The observation magnification may be set to a magnification that allows measurement of at least 20 particles.

Grain boundaries should be determined by confirming an orientation difference between adjacent crystal grains using a transmission electron microscope, or the like. However, in a secondary electron image and a reflected electron image of a high resolution scanning electron microscope, grain boundaries with a large orientation difference may be easily identified by an edge effect due to a slight unevenness caused by the contrast difference between crystal grains and the presence of grain boundaries. Therefore, grain boundaries may be determined by using the contrast caused in the secondary electron image and the reflected electron image of a scanning electron microscope without confirming the orientation difference. The grain boundaries identified in this way is defined as particle boundaries, and those surrounded by the particle boundaries are defined as particles in the present disclosure. When observed with a transmission electron microscope at high magnification, even finer crystal grains may be present in the particles. However, the size of the particles specified in the present disclosure is based on particle size.

Actually, fracture cracks propagating through the composite ceramic often proceed along or near such grain boundaries, which can be observed by SEM. Therefore, even if the particles observed in the SEM are separated into crystallographically smaller crystal grains, it is the particle size observed in the SEM, which is contrasted by polishing, that particularly affects the fracture toughness. In the present disclosure, the relationship between the particle size and the crystal grain size satisfies a relationship of particle size $\geq$ crystal grain size. In a case in which the nitride phase is silicon nitride and the oxide phase is zirconia, the atomic numbers of the constituent elements are significantly different, and therefore, the size of the respective phases and crystal grains can be determined even by a scanning microscope. In a case in which the contrast in a secondary electron image and a reflected electron image by a scanning electron microscope cannot be used for determination, another method, such as a transmission electron microscope, that makes it possible to distinguish crystal grains and grain boundaries is used.

In order to determine the average value of the particle size of the toughening phase, it is desirable to increase the number of sections to be measured (number of crystal grains to be measured). It is desirable to increase the number of sections to be measured until the average value converges to a certain value. In order to determine the average value of the particle size of the toughening phase, a line is drawn across at least 20 (preferably 30 or more) grain boundaries per line to determine the average value of the particle size of the toughening phase. The average value of the particle size of the toughening phase may be evaluated by mirror polishing a specified observation surface. The polished surface is evaluated by a scanning electron microscope or a transmission electron microscope with a resolution of 0.1 $\mu$m or less at a magnification of from 5,000 to 50,000 times. The observation magnification varies depending on the size of the microstructure of the toughening phase.

In the composite ceramic of the present disclosure, the particle size in a direction perpendicular to the contact interface with the substrate that corresponds to a thickness of the composite ceramic is often smaller than the particle size in an in-plane direction parallel to the substrate that corresponds to a width of the composite ceramic. Therefore, it is preferable that the composite ceramic of the present disclosure has a greater ability to inhibit cracks from extending in the thickness direction. Accordingly, it is preferable that the particles (in particular, particles in the toughening phase) in the composite ceramic of the present disclosure have a flat shape in such a manner that the particles are deformed in the thickness direction.

In the observation surface for evaluating the microstructure of the composite ceramic phase, a ratio of the average particle size of the toughening phase in a direction parallel to the contact interface between the substrate and the composite ceramic with respect to the average particle size of the toughening phase in a direction perpendicular to the contact interface between the substrate and the composite ceramic is preferably 1.2 or more (average particle size in a direction parallel to the contact interface/average particle size in a direction perpendicular to the contact interface). Regardless of whether the toughening phase is an oxide phase or a nitride phase, the ratio of the average particle sizes is preferably 1.2 or more.

(Morphology of Present Disclosure: [3])

In the composite ceramic layered body of the present disclosure, the nitride applied to the composite ceramic is not limited. As the nitride, silicon nitride ($Si_3N_4$) or aluminum nitride (AlN) is preferable. As the nitride applied to the composite ceramic of the composite ceramic layered body, silicon nitride is the most preferable. The strength and fracture toughness of silicon nitride are superior among engineering ceramics that require mechanical properties. By using silicon nitride, basic properties required for the nitride phase constituting the composite ceramic of the present disclosure can be obtained. Silicon nitride is one of the engineering ceramics with high thermal conductivity. Furthermore, the coefficient of thermal expansion of silicon nitride is about $2.9 \times 10^{-6}$/K, which is small among the engineering ceramics that require strength. These characteristic thermal properties are useful as the nitride phase constituting the ceramic composite ceramic layered body of the present disclosure. Accordingly, by using silicon nitride as the nitride, the composite ceramic layered body is useful for applications such as insulated heat dissipating boards, transfer rolls, or rolling rolls. In the case of improving the thermal conductivity of the composite ceramic, a β-silicon nitride phase is preferable among silicon nitrides.

Examples of silicon nitride include ternary $\alpha$-$Si_3N_4$ and hexagonal $\beta$-$Si_3N_4$. Silicon nitride may include one or both of these crystal structures.

In the composite ceramic layered body of the present disclosure, the first phase of the composite ceramic may be the nitride phase. In a case in which the nitride phase is the first phase, the nitride phase as the first phase is preferably a silicon nitride phase or an aluminum nitride phase, more preferably a silicon nitride phase, and more preferably a β-silicon nitride phase.

(Morphology of Present Disclosure: [4])

In the composite ceramic layered body of the present disclosure, the oxide applied to the composite ceramic is not limited. As the oxide, zirconia, alumina, or a rare earth oxide is preferable. As the oxide applied to the composite ceramic of the composite ceramic layered body of the present disclosure, zirconia ($ZrO_2$) is more preferable. Zirconia has, like silicon nitride, excellent strength and has excellent fracture toughness value among single ceramics. By using zirconia as the oxide, desirable properties as the oxide phase constituting the composite ceramic of the present disclosure can be obtained. The coefficient of thermal expansion of zirconia is about $11 \times 10^{-6}$/K, which is one of the largest among the oxides used as engineering ceramics that require strength. Therefore, by using zirconia, a coefficient of thermal expansion close to that of metals can be obtained. Furthermore, the thermal conductivity of zirconia is one of the smallest among oxides used as engineering ceramics. Such characteristic thermal properties of zirconia are useful as the oxide phase constituting the composite ceramic layered body of the present disclosure.

Zirconia is stable in monoclinic crystal at room temperature. By incorporating yttrium, calcium, magnesium, cerium ions into the crystal structure of zirconia, zirconia can be stably present at room temperature even either in tetragonal crystal or cubic crystal. Zirconia applied to the composite ceramic layered body of the present disclosure may be of any crystal structure.

In the composite ceramic layered body of the present disclosure, the first phase of the composite ceramic may be the oxide phase. The oxide phase as the first phase is preferably a zirconia phase, an alumina phase, or a rare earth oxide phase, and more preferably a zirconia phase.

(Morphology of Present Disclosure: [5])

In the composite ceramic layered body of the present disclosure, the combination of the nitride phase and the oxide phase constituting the composite ceramic is preferably: a combination of a silicon nitride phase and a zirconia phase; a combination of a silicon nitride phase and an alumina phase; a combination of a silicon nitride phase and a rare earth oxide phase; a combination of an aluminum nitride phase and a zirconia phase; a combination of an aluminum nitride phase and an alumina phase; or a combination of an aluminum nitride phase and a rare earth oxide phase. Among these, as the combination of the nitride phase and the oxide phase, the combination of a silicon nitride phase and a zirconia phase; the combination of an aluminum nitride phase and an alumina phase; and the combination of a silicon nitride phase and a rare earth oxide phase are preferable. In particular, the combination of a silicon nitride phase and a zirconia phase is considerably useful. The silicon nitride phase to be combined with the oxide phase is preferably a β-silicon nitride phase.

In the composite ceramic layered body of the present disclosure, the combination in which a Young's modulus of the nitride phase is larger than a Young's modulus of the oxide phase is preferable. In this regard, as the combination of the first phase and the toughening phase constituting the composite ceramic, a combination of a silicon nitride phase and a zirconia phase; a combination of a silicon nitride phase and a rare earth oxide phase; a combination of an aluminum nitride phase and a zirconia phase; or a combination of an aluminum nitride phase and a rare earth oxide phase is preferable. Among these, the combination of a silicon nitride phase and a zirconia phase; the combination of an aluminum nitride phase and a zirconia phase; and the combination of a silicon nitride phase and a rare earth oxide phase are preferable, and the combination of a silicon nitride phase and a zirconia phase is more preferable.

The Young's modulus (elastic modulus) of zirconia is about 220 GPa, while the Young's modulus of $\beta$-silicon nitride is about 290 GPa. These Young's moduli differ from each other by 32% as a value calculated from the Formula 1 described above. Accordingly, when these materials are microscopically and rigidly bound as the phases constituting the composite ceramic of the composite ceramic layered body of the present disclosure, a microscopic and complex stress field is created within the composite ceramic in a case in which a macroscopic stress field or strain occurs. As a result, crack extending pathways in the composite ceramic become more complicated and the toughness is expected to be improved compared to a single-phase ceramic.

The thermal properties of silicon nitride and zirconia are opposite to each other among engineering ceramics with high mechanical properties. By compositing silicon nitride and zirconia, properties that cannot be obtained with a single-phase silicon nitride or a single-phase zirconia can be exhibited.

Furthermore, a large difference in coefficient of thermal expansion between silicon nitride and zirconia may cause microscopic cracks within the material. When silicon nitride and zirconia are microscopically composited with an average particle size of 1 $\mu$m or less in the composite ceramic, as described in Morphology of Present Disclosure [2], microcracks are formed due to the difference in coefficient of thermal expansion. An effect that the microcracks inhibit fracture cracks from extending to improve the fracture toughness is expected.

Furthermore, when the substrate is a metal, as a ratio of the zirconia phase with respect to the silicon nitride phase is increased, difference in coefficient of thermal expansion between the substrate and the composite ceramic that is coated on the substrate in the composite ceramic layered body becomes smaller. In this case, the reliability of the composite ceramic layered body against thermal cycle can be increased.

The thermal conductivity of the composite ceramic can be increased by increasing the silicon nitride phase relative to the zirconia phase. On the other hand, when the zirconia phase is increased relative to the silicon nitride phase, the thermal insulation of the composite ceramic can be increased.

The ratio of the silicon nitride phase and the zirconia phase can be widely determined by designing according to the thermal properties required by each application.

In the composite ceramic layered body of the present disclosure, the zirconia phase in the composite ceramic is not specified, and may have a plurality of crystal structures. It is preferable that the zirconia phase partially has a tetragonal structure. In a case in which the zirconia phase contains zirconia having a tetragonal crystal, the tetragonal zirconia phase undergoes a stress-induced transformation to a monoclinic crystal due to tensile stress in a case in which cracks extend to generate the tensile stress at the tip of the cracks. This transformation can be expected to relieve the stress. In addition, an effect that microcracks generated in the composite ceramic inhibit cracks from extending to increase the fracture toughness can be expected.

As described above, the composite ceramic including the combination of silicon nitride and zirconia is an excellent material. However, with this combination, it is difficult to achieve densification even when heated at a high temperature by a sintering method. Further, a large amount of $Si_2N_2O$, which is a reaction phase of silicon nitride and an oxide, is formed, and the mechanical and thermal properties are impaired.

Examples of useful combinations other than the combination of silicon nitride and zirconia include: a combination of silicon nitride and alumina; and a combination of aluminum nitride and alumina. The Young's modulus of alumina is about 370 GPa, which differs from the Young's modulus of $\beta$-silicon nitride ($\beta$-$Si_3N_4$) by about 28%. The Young's modulus of aluminum nitride is about 310 GPa, which differs from the Young's modulus of alumina by about 19%. Accordingly, the composite ceramic obtained by each of the combinations can have higher fracture toughness than a single-phase ceramic due to a crack deflection effect. Note that, in a combination of $\alpha$-$Si_3N_4$ and $Al_2O_3$, Young's moduli differ from each other by 5.4%. In this case, for example, a rare earth oxide with different Young's modulus may be added to $\alpha$-$Si_3N_4$ such that a ratio of Young's moduli determined by the Formula 1 described above is 10% or more.

Alumina and magnesia, which have high thermal conductivity among oxides, are combined with aluminum nitride or silicon nitride that has high thermal conductivity, by which it is possible to form a composite ceramic with excellent mechanical properties and heat dissipation. Therefore, the coating of a composite ceramic using such a combination is useful for a ceramic layered body used as an insulated heat dissipating board.

A rare earth oxide has a low Young's modulus and is especially suitable for a composite with a nitride that has a high Young's modulus. The aerosol deposition method described below is used as a manufacturing method of the present disclosure to have a rare earth oxide contained in a nitride, by which a film deposition rate can be improved and a film thickness can be increased. In a case of forming a composite ceramic that is composed mainly of silicon nitride, zirconia and a rare earth oxide have an effect of reducing the porosity. A combination of silicon nitride and at least one of zirconia or a rare earth oxide is effective for densification.

(Morphology of Present Disclosure: [6])

The substrate in the ceramic layered body of the present disclosure is not limited. The substrate may be an inorganic material substrate such as a ceramic. The substrate may be an organic material such as a resin. The substrate may be a composite substrate of an organic material and an inorganic material, such as CFRP (Carbon Fiber Reinforced Plastics). The substrate may be a metal substrate.

Among various applications, the ceramic layered body of the present disclosure is expected to be used for insulated heat dissipating boards, insulated heat dissipating circuit boards, transfer rolls, rolling rolls, or the like. Preferably, the substrate used for these applications is made of metal. In an insulated heat dissipating board, copper or aluminum is preferably applied as the metal substrate. In a roll, an iron-based metal material or a nickel-based heat-resistant metal material is particularly desirable to be applied as the metal substrate.

The coefficient of thermal expansion of each of silicon nitride and aluminum nitride is small, and therefore, greatly differs from that of metals. In the case of layering the ceramic and a metal substrate to construct a layered body, a large thermal stress is generated by repeated thermal cycles of heating and cooling when the layered body is used. By applying alumina or zirconia, which has a higher coefficient of thermal expansion, as the oxide to be combined with the nitride, the thermal stress within the composite ceramic can be reduced and the thermal reliability of the composite ceramic layered body can be increased. In particular, zirconia has a great effect of increasing thermal reliability.

(Manufacturing Method)

The method of manufacturing a composite ceramic layered body of the present disclosure is not limited. A preferred example of the method of manufacturing a composite ceramic layered body of the present disclosure is a method of controlling adjustment of raw material powders and process conditions to favorable those by using an aerosol deposition method (AD method). According to such a method, the composite ceramic layered body of the present disclosure can be realized. The AD method is a method in which nitride particles and oxide raw material particles are mixed with a gas, and the nitride raw material particles and the oxide raw material particles are jetted together with the gas toward a surface of a substrate layer to collide therewith, thereby layering a composite ceramic coating on the surface of the substrate. By controlling raw materials and process conditions to favorable those, a dense film can be formed at room temperature, and generation of a reactive phase such as an oxynitride phase at grain boundaries of the composite ceramic can be greatly suppressed.

A preferred example of the method of manufacturing a composite ceramic layered body of the present disclosure includes the following steps.

A step of preparing a mixed raw material in which nitride raw material particles, and oxide raw material particles having an elastic modulus that differs from an elastic modulus of the nitride raw material particles by 10% or more, are mixed.

A step of mixing a gas with the mixed raw material to produce an aerosol, and jetting the aerosol toward the substrate.

As process conditions in a case in which an AD method is used, it is important to enable a dense film deposition on the surface of a substrate with a composition close to that of the raw material powder that contains nitride raw material particles and oxide raw material particles. For this reason, the condition is not limited to only one specific condition. It is important to intensively study the conditions for obtaining the requirements described above. For example, it is difficult to obtain a densely-dispersed composite ceramic unless both nitride raw material particles (also referred to as nitride raw material powder) and oxide raw material particles (also referred to as oxide raw material powder) are well deposited. In a case in which the film deposition composition significantly differs from the mixture composition, the composition of the composite ceramic may vary, or only one component in the raw material powder may be lost, by which a stable film formation for a long time cannot be achieved. Therefore, in a case in which the deposition composition and the mixture composition differ from each other significantly, a composite ceramic with a large area and a large film thickness cannot be obtained. From the point of view, it is much more difficult to form a composite ceramic film by an AD method, compared with the case of forming a single-phase film. Therefore, in order to obtain a favorable composite ceramic coating, the raw material powder or the like need to be studied individually depending on the configuration of the composite ceramic layered body or the combination of the composite ceramic.

The method of manufacturing a ceramic layered body of the present disclosure may be a manufacturing method in which an aerosol of nitride raw material particles mixed with a gas and an aerosol of oxide raw material particles mixed with a gas are individually formed, and the respective two aerosols are simultaneously jetted from different nozzles to collide with a surface of a substrate, thereby layering a composite ceramic on the surface of a substrate.

Another manufacturing method may be a manufacturing method in which a mixed raw material that contains nitride raw material particles and oxide raw material particles with a predetermined composition is mixed with a gas, an aerosol of the mixed raw material is generated, and the aerosol of the mixed raw material is jetted from one nozzle toward a surface of a substrate to collide with the surface of a substrate, thereby layering a composite ceramic on the surface of a substrate. In a case in which this method is adopted, it is important to have nitride raw material particles and oxide raw material particles as mixed raw materials to be mixed uniformly enough in advance, using a rolling ball mill, a planetary ball mill, a bead mill, a jet mill, or the like.

The nitride raw material particles and the oxide raw material particles used as raw material powders preferably have a median diameter of 10 $\mu$m or less (preferably 1 $\mu$m or less) and 0.1 $\mu$m or more, respectively. Particles having a size of larger than 10 $\mu$m are not deposited on a substrate, and damage the substrate by a blasting effect. When particles are too fine, the composite ceramic film does not become dense. Particles having a size of smaller than 0.1 $\mu$m are likely to aggregate, and it is difficult to control the state of the particles in an aerosol. In order to mix the nitride raw material particles and the oxide raw material particles uniformly, the particles are mixed by the ball mill or the like described above. At this time, it is important to determine the particle size and the mixing conditions of the nitride raw material particles and the oxide raw material particles, taking into account grinding of the raw material powder. The median diameter is measured by using a laser diffraction particle size distribution analyzer while being sufficiently dispersed in a medium under wet condition.

The gas that forms an aerosol is not particularly limited, and examples thereof include an inert gas such as nitrogen gas, helium, or argon. Helium gas is light, which enables the jetting rate of an aerosol to be increased. In this regard, the use of helium gas enlarges the process window in terms of a median diameter range possible for deposition of nitride raw material particles and oxide raw material particles, or the like. In consideration of cost, it is preferable to use nitrogen gas as the gas to form an aerosol.

The optimal deposition conditions vary depending on the size of the raw material. The deposition conditions are not particularly limited. For example, when the mixed raw material powder has a favorable median diameter in accordance with the type of the nitride and the oxide as the raw material particles having a median diameter in a range of from 0.1 $\mu$m to 10 $\mu$m, and the ratio of the nitride and the oxide, it is preferable to adjust the deposition gas flow amount in such a manner that the flow rate of a gas that passes through a nozzle falls within a range of from 50 m/s to 800 m/s, and the pressure in a deposition chamber falls within a range of from 50 Pa to 1,000 Pa. Under such conditions, the composite ceramic of the present disclosure results in satisfying the above-described void conditions.

When the size of the mixed powder raw material particles of the nitride raw material particles and the oxide raw material particles is within the above-described median diameter range and nitrogen gas is used as a gas to form an aerosol, it is desirable that the flow rate is at a lower limit (50 m/s) side. On the other hand, in a case in which helium gas is used, it is desirable that the flow rate is at an upper limit (800m/s) side. In a case in which the flow rate of a gas passing through a nozzle is too small, the kinetic energy of the particles is small, which results in failure of deposition or formation of a compressed powder with many voids. On the other hand, in a case in which the flow rate of a gas passing through a nozzle is too high, raw material particles contained in an aerosol that is jetted toward a substrate destroy the substrate, which results in failure of deposition.

In a case in which a composite ceramic is deposited on the surface of a flat substrate by an aerosol deposition method, the following methods are used.

(1) A method of using a nozzle of which nozzle width is the same as the deposition width, and simply reciprocating the nozzle or the substrate as a workpiece for the deposition length, along the deposition surface of the substrate, in a direction perpendicular to the nozzle width direction.

(2) A method of using a nozzle of which nozzle width is smaller than the deposition width and, during reciprocal movement of the nozzle or the substrate along the deposition surface of the substrate, feeding the nozzle or the workpiece in a horizontal direction orthogonal to the reciprocal movement direction (also referred to as a deposition surface length direction) to carry out deposition.

On the other hand, in a case in which a composite ceramic coating is deposited on the circumference surface of a substrate that serves as a circular columnar or cylindrical workpiece, the composite ceramic is deposited while the workpiece is rotated around its central axis. In this case, the following methods may be used as is the case with deposition on the surface of the flat substrate.

(1) A method of using a nozzle of which nozzle width is the same as the deposition width, and fixing the nozzle to carry out deposition.

(2) A method of using a nozzle of which nozzle width is smaller than the deposition width and, while keeping the nozzle parallel to the central axis of the workpiece, feeding the nozzle in a width direction (axial direction) and reversing the nozzle at the end of the deposition surface width direction (end of axial direction), to carry out deposition on the circumference surface.

In a case in which a dense composite ceramic is formed by an AD method under favorable conditions, the microstructure of the composite ceramic is smaller than the size of the raw material particles. Therefore, the strength of the composite ceramic is increased, and mechanical and thermal reliability of the composite ceramic layered body of the present disclosure is enhanced.

In a case in which a dense composite ceramic is formed by an AD method under favorable conditions, the shape of individual nitride and oxide phases has a microstructure (accordingly, a microstructure that is deformed in a thickness direction of the composite ceramic) that is flattened in a direction parallel to the contact interface (surface on which the ceramic layered body is formed) with the substrate. Therefore, cracks are less likely to extend in a direction perpendicular to the plane of a substrate, and fractures that penetrate in a deposition thickness direction are less likely to occur. As a result, mechanical reliability of the composite ceramic layered body is enhanced.

In general, a compressive stress field is created within a film formed by an AD method. In the present disclosure, in the composite ceramic film formed by an AD method, an elastic modulus of the nitride phase and an elastic modulus of the oxide phase differ from each other by 10% or more. In this case, since the elastic modulus of the nitride phase and the elastic modulus of the oxide phase differ from each other, a state in which, particularly, the stress field changes microscopically can be formed. As a result, a greater effect of inhibiting cracks from extending can be obtained.

In a conventional ceramic insulated circuit board, a ceramic is jointed with a metal substrate such as copper at a high temperature. As a result, in the ceramic insulated circuit board, a residual thermal stress is generated due to difference in coefficient of thermal expansion between the ceramic coating and the substrate, which may lead to fracture of the ceramic. Conventionally, a ceramic insulated circuit board is subjected to thermal stress by introducing semiconductors, peripherals, or the like into the ceramic insulated circuit board, as well as by repeated thermal cycling during use, which may lead to fracture of the ceramic.

In particular, in the vicinity of the contact interface between a metal substrate and a ceramic, both residual tensile stress generated during jointing and thermal internal stress received during use are present at a side of the metal circuit edge ceramic, which may often lead to fracture of the ceramic.

According to the composite ceramic layered body of the present disclosure, the above-described sizes of the oxide and nitride phases, morphology of the oxide and nitride phases, and compressive stresses in the in-plane direction that remains within the composite ceramic relieve such a stress that destroy a coating of the composite ceramic. Therefore, in a case in which the composite ceramic layered body of the present disclosure is used as a ceramic insulated circuit board, a hot roll, or the like, it is expected that fracture caused by thermal stress due to repeated thermal cycling during use is suppressed.

Zirconia is stable in monoclinic crystal at room temperature, stable in tetragonal crystal at a temperature range of from 1,170°C to 2,200°C that encompasses sintering temperature range, and stable in cubic crystal at higher temperature than the above range. Therefore, zirconia undergoes a diffusionless transformation from tetragonal crystal to monoclinic crystal when cooled to room temperature after sintering. Since the volume of zirconia changes significantly with phase transformation, cracks may occur within an oxide phase, which may significantly degrade the mechanical strength. Therefore, in a general sintered zirconia, a certain amount of a stabilizer such as yttria, ceria, calcia, or magnesia is added to stabilize the high temperature phase (accordingly, cubic crystal and tetragonal crystal) in order to suppress degradation of mechanical strength.

Since an AD method does not include a sintering process, the oxide phase may be of any crystal form when the usage temperature is 1,170°C or lower. However, in order to take advantage of the toughening mechanism that absorbs the energy at a crack tip by stress-induced transformation of the oxide phase from tetragonal crystal to monoclinic phase, it is important that at least a part of the oxide phase is tetragonal crystal at the usage temperature.

The dense composite ceramic coating prepared by the manufacturing method of the present disclosure enables formation of a phase including a tetragonal oxide under certain process conditions, even when a monoclinic oxide is used as the raw material. In a case in which a composite ceramic that contains the tetragonal oxide is coated on a substrate, the composite ceramic layered body with excellent mechanical properties can be obtained even without containing a stabilizer for stabilizing a high temperature phase. It is advantageous in terms of cost because expensive yttria does not have to be intentionally included. The above-described stabilizer may be incorporated into the composite ceramic coating to form a composite ceramic coating that is composed of the oxide phase of tetragonal crystal and cubic crystal with excellent mechanical strength and the nitride phase, for reasons such as use at a high temperature. Even in this case, the amount of yttria as a stabilizer can be smaller than that used in a sintering method. For example, in order to partially stabilize the oxide phase, only 4.5% by mass or less of a stabilizer is needed. In a case in which the content of a stabilizer is too large, the amount of a cubic oxide having ion conductivity increases. Therefore, in a case in which a composite ceramic that includes a cubic oxide as the first phase is used as a ceramic insulated board, the insulating properties should be kept in mind.

The composite ceramic layered body and the method of manufacturing a composite ceramic layered body of the present disclosure realize excellent fracture toughness by the above-described configuration.

The composite ceramic layered body of the present disclosure includes, on a substrate, a composite ceramic obtained by finely and densely compositing the nitride phase and the oxide phase that differ from each other in elastic modulus. Therefore, the composite ceramic layered body of the present disclosure is expected to have higher strength and toughness than those of a single-phase ceramic, and the coefficient of thermal expansion and thermal conductivity are expected to be controlled. Also, high mechanical reliability and high thermal reliability are expected. Here, the mechanical reliability and the thermal reliability refer to strength, fracture resistance against thermal cycling, abrasion resistance, thermal conductivity, thermal insulation, or the like of the layered body.

The method of manufacturing a composite ceramic layered body of the present disclosure allows to form a composite ceramic on a substrate at normal temperature (20°C ± 15°C). Therefore, a nitride phase and an oxide phase can be finely and densely composited. Furthermore, even when a composite ceramic is coated on a substrate of which coefficient of thermal expansion differs from a coefficient of thermal expansion of the composite ceramic, the residual thermal stress generated at an interface between the composite ceramic and the substrate is small. Therefore, it is expected that a composite ceramic layered body with high mechanical reliability and high thermal reliability is manufactured.

Furthermore, an effect that a compressive stress field generated within the composite ceramic suppresses fracture at the composite ceramic side in the vicinity of a contact interface between the substrate and the composite ceramic, the fracture being caused by both residual tensile stress generated during jointing the substrate and the composite ceramic and thermal stress and mechanical stress received during use, is expected.

Furthermore, because the thermal stress during formation of the composite ceramic layered body is small, the thickness of a substrate is not limited due to the thermal stress. Therefore, by making a substrate thicker, the substrate itself can serves as a heat sink, a heat spreader, or the like.

For example, for ceramic insulated circuit boards, higher heat resistance and higher durability against thermal cycling are required due to electrification of automobiles and use of SiC semiconductors. For roll surfaces of rolling rolls and transfer rolls, tougher and more abrasion-resistant materials are demanded. The composite ceramic layered body of the present disclosure is expected to have excellent fracture toughness as well as the above-described properties. Therefore, the composite ceramic layered body of the present disclosure is useful, for example, for application to a ceramic insulated board for a power semiconductor device. Further, the composite ceramic layered body of the present disclosure is useful, for example, for application to a rolling roll or a transfer roll.

Examples

The present disclosure is described in detail by way of Examples below, but the present disclosure is not limited in any way by the Examples. These Examples are illustrative of the present disclosure.

(Example 1)

Here, as Example 1, an aerosol deposition method was used to prepare a composite ceramic layered body in which a composite ceramic that is a combination of a silicon nitride phase and a zirconia phase as a combination of the oxide phase and the nitride phase was coated on a copper plate as a substrate. A ceramic layered body in which a ceramic of a single-phase silicon nitride or a single-phase zirconia was coated on a substrate was also prepared.

The silicon nitride raw material powder used as the raw material is β-silicon nitride containing less than 5% α-silicon nitride. The zirconia raw material powder used as the raw material is zirconia that is mainly monoclinic crystal with no stabilizer added. These powders were weighed in a predetermined quantity and kneaded in a planetary ball mill with acetone as a medium for 24 hours. A pot and balls of the planetary ball mill were made of β-silicon nitride and a size of the balls was Φ5 mm. The powder obtained by kneading was heated to 150°C and sufficiently dried. This dried powder was used as a raw material powder.

The raw material powders prepared are as follows. The mixing ratio is a ratio in terms of mass.

Raw material 1 is a raw material powder of single zirconia without adding silicon nitride.

Raw material 2 is a raw material powder obtained by mixing zirconia and silicon nitride at a ratio of 17:3 (zirconia : silicon nitride).

Raw material 3 is a raw material powder obtained by mixing zirconia and silicon nitride at a ratio of 1:1 (zirconia : silicon nitride).

Raw material 4 is a raw material powder obtained by mixing zirconia and silicon nitride at a ratio of 1:5 (zirconia : silicon nitride).

Raw material 5 is a raw material powder of single silicon nitride.

The median diameters of the raw material powders of Raw materials 1 to 5 ranged from 0.5 μm to 0.9 μm, respectively.

Next, a ceramic was formed on a pure copper plate of 13 mm × 13 mm × 1 mmt (width × length × thickness) using each of these raw material powders. Specifically, an aerosol was formed by blowing 10 L/min. of nitrogen gas to the raw material powder in an aerosolization chamber, while vibrating the aerosolization chamber containing the raw material. The formed aerosol was transferred, using a pressure difference, from an upper portion of the aerosolization chamber to a deposition chamber that was connected with the upper portion by a pipe and was pressurized down to 90 Pa, and accelerated and jetted toward a 13 mm × 13 mm surface of the pure copper plate (copper substrate) as a substrate by a slit nozzle that was provided at the end of the pipe and had an opening size of 0.3 mm in the X-direction and 15 mm in the Y-direction, thereby carrying out deposition.

The driving speed of the substrate was 1 mm/s in the X direction, and the substrate was moved back and forth with a driving length of 15 mm. The copper substrate with a 13 mm × 13 mm substrate deposition surface was placed at the center of a 15 mm × 15 mm region through which the nozzle passes. The number of time of layering was 60. Thus, a ceramic layered body with a composite ceramic coating layered on the entire surface at one side of the 13 mm × 13 mm square copper substrate was prepared. The composite ceramic layered body or the ceramic layered body prepared using each of Raw materials 1 to 5 was designated as Samples 1 to 5. A composite ceramic layered body was prepared by deposition using Raw material 2 in the same condition, except that the gas flow rate was changed to 30 L/min. and the pressure in the deposition chamber was changed to 310 Pa, and was designated as Sample 6.

The constituent materials of the deposition surface were identified by X-ray analysis. The X-ray diffraction peaks of each sample were in agreement with those of silicon nitride and zirconia used as the raw materials, and copper used as the substrate. The peak of $Si_2N_2O$ generated when silicon nitride reacts with an oxide as shown in Patent Document 3 was not confirmed. From peaks of the zirconia phase, it was found that there was not only a monoclinic crystal as is the case with the zirconia raw material powder, but also a tetragonal crystal that is a high temperature phase, as a main component, although no stabilizer was contained. This is thought to be due to a compressive stress on the film during deposition, which caused a stress-induced transformation.

For Samples 1 to 6, a cross-section orthogonal to the contact interface between the copper substrate and the composite ceramic was mirror-polished and subjected to conductive treatment with ultra-thin carbon to observe the microstructure of the cross-section. An FE-SEM (ULTRA 55, manufactured by Zeiss) was used for observation. The observed results of the microstructure are shown in Table 1.

[Table 1]

| Raw material | Sample | Raw material median diameter (μm) | Film thickness (μm) | $Si_3N_4$ area ratio (%) | $ZrO_2$ area ratio (%) | Void area ratio (%) | Thickness direction particle size (μm) | Width direction particle size (μm) | Crack evaluation | Remarks |
|---|---|---|---|---|---|---|---|---|---|---|
| Raw material 1 | Sample 1 | 0.90 | 40.1 | 0.0 | 99.8 | 0.3 | 0.11 | 0.20 | B | Comparative Example |
| Raw material 2 | Sample 2 | 0.90 | 35.9 | 18.0 | 78.9 | 3.1 | 0.12 | 0.20 | A | Example |
| Raw material 3 | Sample 3 | 0.71 | 30.1 | 62.1 | 37.5 | 0.4 | 0.058 | 0.098 | A | Example |
| Raw material 4 | Sample 4 | 0.62 | 29.3 | 91.0 | 8.9 | < 0.1 | 0.048 | 0.095 | A | Example |
| Raw material 5 | Sample 5 | 0.51 | 10.1 | 98.9 | 0.0 | 0.9 | 0.086 | 0.13 | B | Comparative Example |
| Raw material 2 | Sample 6 | 0.90 | 38.9 | 20.1 | 79.8 | <0.1 | 0.062 | 0.12 | A | Example |

It was found that a ceramic film with a thickness of about from 10 μm to 40 μm was formed on the surface of the copper substrate. The film thickness of the composite ceramic deposited with a mixed raw material containing zirconia was larger than that of a ceramic deposited with only silicon nitride powder, even if the content of zirconia was small. Zirconia has an ability to increase the efficiency of deposition.

The proportions (area ratios) of the silicon nitride phase, the zirconia phase, and the void were determined by image processing from a magnification of 20,000 times of secondary electron image obtained by a scanning electron microscope (SEM) at an acceleration voltage of 5 kV. By adjusting the contrast and brightness of the SEM image, it was confirmed by EDS that the zirconia phase was distinguished as the brightest near-white contrast, the silicon nitride phase was distinguished as the gray intermediate contrast, and the void (recessed portion) was distinguished as the darkest near-black contrast. Discrimination between the zirconia phase and the silicon nitride phase was confirmed by EDS installed on the scanning electron microscope. The size of the field of view at a magnification of 20,000 times was 56.6 μm × 42.5 μm, and particles having a size of 0.01 μm could be also distinguished.

By using an image processing software (Image Pro, manufactured by NIPPON ROPER K.K.), the obtained image was separated and extracted into the silicon nitride phase, the zirconia phase, and the voids having a long diameter of 0.1 μm or more, and the area ratios thereof were calculated, respectively. The ratio shown in Table 1 is an average value from five images at different locations.

The area ratio of the silicon nitride phase and the zirconia phase in the composite ceramic was close to the volume ratio percentage converted from the feed weight percentage and theoretical density of the raw material powder. The reason why the area ratio of the sum of the silicon nitride phase, the zirconia phase, and the voids is not 100% is that there is a slight amount of voids having a long diameter of 0.1 μm or less.

The area ratio of the voids having a long diameter of 0.1 μm or less was small, except for Sample 2. The reason why the porosity of Sample 2 is large is considered that the median diameter of the raw material was 0.9 μm, which was slightly large, and the deposition conditions were not suitable. In particular, there were many voids in the vicinity of large zirconia particles, especially at the substrate side, among the particles constituting the composite ceramic. Based on these results, the density of Sample 6, which was prepared by changing the deposition conditions as described above, was able to be increased even the same raw material was used.

In Example 1, the phases constituting the composite ceramic of the composite ceramic layered body are the silicon nitride phase and the zirconia phase. Therefore, in the composite ceramics of Samples 2 and 6, since an area ratio that is occupied by the zirconia phase is larger, the first phase is the zirconia phase, and the second phase is the silicon nitride phase. Since the first phase is an oxide phase, the silicon nitride phase serves as a toughening phase. In the composite ceramics of Samples 3 and 4, since an area ratio that is occupied by the silicon nitride phase is larger, the first phase is the silicon nitride phase, and the second phase is the zirconia phase. Since the first phase is a nitride phase, the zirconia phase serves as a toughening phase.

The particle size of the toughening phase was measured as follows. First, a magnification of 30,000 times of secondary electron image of the cross-section orthogonal to a contact interface between the composite ceramic and the substrate was obtained by SEM. Next, a straight line parallel to and a straight line perpendicular to the contact interface between the substrate and the composite ceramic were drawn, respectively. Next, for each of the parallel and perpendicular lines, boundary locations at which the first phase and the toughening phase intersect were marked. Next, for each of the directions parallel to and perpendicular to the contact interface between the substrate and the composite ceramic, the distance (distance of section) between marks of the toughening phase was converted into an actual length, and an average distance was calculated as the average particle size. The particle size shown in Table 1 is the average value of approximately 50 sections of the toughening phase. In Table 1, the average particle size in the direction perpendicular to the contact interface is described as the thickness direction particle size, and the average particle size in the direction parallel to the contact interface is described as the width direction particle size.

Sample 1 and Sample 5 are of a single-phase zirconia and a single-phase silicon nitride, respectively, and therefore, a toughening phase is not present. For reference, the average particle size obtained by measuring the interface of particles in the first phase observed by SEM using the intersection method is shown.

The average particle size of the ceramic coating in all samples was smaller than that of a dense silicon nitride or zirconia ceramic obtained by a conventional sintering method. The average particle size in the film thickness direction perpendicular to the contact interface between the ceramic and the substrate was smaller than that in the direction parallel to the contact interface between the ceramic and the substrate. In other words, the zirconia phase and the silicon nitride phase appear to be deformed in the film thickness direction.

The grain boundaries of the zirconia phase and the silicon nitride phase in the composite ceramic are tightly bound except where voids are present. The grain boundaries were observed by magnifying up to 50,000 times, and reactive phases were not observed either in the grain boundaries between the silicon nitride phases and the grain boundaries between the zirconia phases, or in the grain boundaries between the silicon nitride phase and the zirconia phase, and a phase other than the silicon nitride phase and the zirconia phase was not observed.

Then, an operation in which a diamond Vickers indenter (hereinafter, simply referred to as "indenter") was pushed into a mirror-polished observation surface with a load of 50 gf, held for 15 seconds, and then lifted was repeated with a distance sufficient to avoid overlapping tips of cracks caused by the indenter. Since the indenter has a shape of square pyramid, an indentation is almost square in shape. The indenter was pushed in such a manner that one of the diagonals connecting the tops of the square indentation became perpendicular to the contact interface between the ceramic and the substrate, and the other of the diagonals became parallel to the contact interface between the ceramic and the substrate. After indentations were applied, the indentations and cracks were observed by FE-SEM. The number of indentations was seven.

In all of Samples 1 to 6, cracks were found to occur from, among the tops of the square indentation, two tops of the indentation on the diagonal line parallel to the contact interface between the ceramic and the substrate toward the outside of the indentation. On the other hand, in all of Samples 1 to 6, no cracks were found to occur from the tops of the indentation on the diagonal line in the thickness direction (accordingly, direction perpendicular to the contact interface between the ceramic and the substrate) of the substrate toward the thickness direction of the substrate. This indicates that cracks and extension thereof are unlikely to occur with respect to the thickness direction of the ceramic provided on the substrate. Therefore, it is indicated that the fracture toughness is higher in the direction perpendicular to the contact interface between the ceramic and the substrate. This is due to the following two effects. One effect is a structural effect in which the morphology of each of the oxide phase and the nitride phase is deformed in the direction parallel to the contact interface between the composite ceramic and the substrate, resulting in a structure in which cracks that extend between the particles in the oxide phase and the nitride phase are unlikely to develop. Another effect is a process effect due to a compressive stress of the coating that is applied in an in-plane direction parallel to the contact interface between the composite ceramic and the substrate.

On the other hand, cracks extending in a plane perpendicular to the thickness direction (accordingly, in a plane parallel to the contact interface between the composite ceramic and the substrate) were found to extend between or in the vicinity of crystal grains as observed mainly by SEM. In some of the particles with a particle size of more than 1 $\mu$m, cracks were observed to penetrate the inside of the particles. The length of crack and the path of crack extension were different in some samples. The crack evaluation in Table 1 shows the results of the evaluation of the length of crack that occurred in a direction parallel to the contact interface between the composite ceramic and the substrate. The crack evaluation in Table 1 was carried out in accordance with the following evaluation criteria A to C.

A: Cracks of which distance between the tips of the cracks spreading to both sides is less than twice the length of the diagonal line of the Vickers indentation.
B: Cracks of which distance between the tips of the cracks spreading to both sides is from twice to three times the length of the diagonal line of the Vickers indentation.
C: Cracks of which distance between the tips of the cracks spreading to both sides is more than three times the length of the diagonal of the Vickers indentation.

The crack evaluation results shown in Table 1 show the most frequent evaluation criteria out of the evaluation criteria at seven indentations.

Samples 1 and 5 were determined to be B, which is better than an alumina film prepared by the same process. From this result, it was found that the fracture toughness was relatively high even in the case of a single silicon nitride ceramic or a single zirconia ceramic. Furthermore, it was found that the crack evaluation of Samples 3, 4, and 6 was superior to that of Samples 1 and 5, and the fracture toughness was improved. A detailed examination of crack pathways revealed that cracks extended along grain boundaries (accordingly, interface of grains) mainly observed by SEM, and bypassed in many places in the vicinity of the heterophasic interface between silicon nitride and zirconia. This indicates that the fracture toughness is improved due to the exhibition of a crack deflection effect. Exhibition of the crack deflection effect is caused by silicon nitride and zirconia that differ from each other in elastic modulus being microscopically, densely, and rigidly bound without reaction. It is thought that a tetragonal zirconia transformed into a monoclinic crystal by a tensile stress at the tip of an extending crack, resulting in also a toughening effect.

For each of the samples except Sample 2, most of the indentations showed the representative determination results shown in Table 1. However, in Sample 2, the number of indentation determined to be A and the number of indentation determined to be B were the same, and the number of indentation determined to be C was only one. In other words, the variation of cracks generated at seven indentations was large in Sample 2. In Sample 2, cracks generated from indentations of which crack length evaluation was determined to be C or B were observed to be more likely to extend in grain boundaries compared to the other composite ceramic coating samples, and this tendency was stronger in the vicinity of voids, and in some cases the cracks reached the voids.

On the other hand, the fracture toughness of Sample 6, which was prepared by optimizing the process conditions to avoid formation of voids, was significantly improved.

The strength and fracture toughness of silicon nitride and zirconia are high even in single phases, respectively, and these properties are not impaired by transformation into other phases by reaction, and the mechanical properties are improved by densely and finely compositing them. However, the improvement in fracture toughness is not sufficient.

By compositing silicon nitride, which has a low coefficient of thermal expansion, with zirconia, which has a high coefficient of thermal expansion, without reacting, the coefficient of thermal expansion of the composite ceramic becomes higher and closer to that of metals. Therefore, by using a metal as the substrate and coating the metal substrate with the composite ceramic, a resulting composite ceramic layered body can be higher in resistance against temperature cycling, thereby constituting a ceramic layered body with high mechanical and thermal reliability. Such a composite ceramic layered body is useful as an insulated heat dissipating board, an abrasion resistant roll, or the like, which is exposed to temperature rise and fall.

(Example 2)

Here, as Example 2, an aerosol deposition method was used to prepare a composite ceramic layered body in which a composite ceramic that is a combination of silicon nitride and zirconia as a combination of the oxide and the nitride was coated on a copper plate (copper substrate) as a substrate. In Example 2, for raw materials of the oxide and the nitride, a raw material in which both raw materials were uniformly mixed and a raw material in which both raw materials were not uniformly mixed were used. The raw material in which both raw materials are not uniformly mixed is a raw material that is mixed in such a manner to be apparently uniform, but not substantially uniformly mixed.

The silicon nitride raw material powder used as the raw material is $\beta$-silicon nitride containing less than 5% $\alpha$-silicon nitride, and the zirconia powder used as the raw material is zirconia that is mainly monoclinic with no stabilizer added. The materials were used to prepare a raw material powder as follows.

Raw material 21: Silicon nitride and zirconia were weighed at a mass ratio of 1:2, and kneaded in a planetary ball mill with acetone as a medium for 20 hours. A pot and balls of the planetary ball mill were made of $\beta$-silicon nitride and a size of the balls was $\Phi$5 mm. The mixed powder obtained by kneading was heated to 150°C and sufficiently dried. This dried mixed powder was used as a raw material powder. The median diameter of the mixed powder was 0.71 $\mu$m.

Raw material 22: Each of silicon nitride and zirconia was individually ground in a planetary ball mill with acetone as a medium, to adjust the medium diameter to be 0.7 $\mu$m. After being individually heated to 150°C and sufficiently dried, the resultants were placed in a Teflon (registered trademark) ball mill container such that a mass ratio of silicon nitride and zirconia is 1:2, and dry kneaded without balls for 30 minutes to become apparently uniform.

Next, a ceramic was formed on a pure copper plate of 40 mm $\times$ 40 mm $\times$ 1 mmt (width $\times$ length $\times$ thickness) using each of these raw material powders. Specifically, an aerosol was formed by blowing 12 L/min. of nitrogen gas to the raw material powder in an aerosolization chamber, while vibrating the aerosolization chamber containing Raw material 21 or 22. The formed aerosol was transferred, using a pressure difference, from an upper portion of the aerosolization chamber to a deposition chamber that was connected with the upper portion by a pipe and was pressurized down to 99 Pa, and accelerated and jetted toward a 40 mm $\times$ 40 mm surface of the pure copper plate (copper substrate) as a substrate by a slit nozzle that was provided at the end of the pipe and had an opening size of 0.3 mm in the X-direction and 5 mm in the Y-direction, thereby carrying out deposition.

The driving speed of the substrate was 2 mm/s in the X direction, and the substrate was moved back and forth with a driving length of 15 mm. The substrate with a 40 mm $\times$40 mm substrate deposition surface was placed at the center of a 5 mm $\times$ 15 mm region through which the nozzle passes. The number of time of layering was 20. Thus, a ceramic layered body with a composite ceramic coating layered on the central portion at one side of the 40 mm $\times$ 40 mm square copper substrate was prepared. The sample prepared from Raw material 21 was designated as Sample 21, and the sample prepared from Raw material 22 was designated as Sample 22.

The constituent materials of the deposition surface were identified by X-ray analysis. The X-ray diffraction peaks of each sample were in agreement with those of silicon nitride and zirconia used as the raw materials, and copper used as the substrate. Other peaks, such as the peak of $Si_2N_2O$ generated when silicon nitride reacts with an oxide as shown in Patent Document 3 or the like were not confirmed. From peaks of the zirconia phase, it was found that there were a lot of tetragonal crystals, which are high temperature phases, although no stabilizer was contained.

For each of Samples 21 and 22, a cross-section orthogonal to the contact interface between the copper substrate and the composite ceramic was mirror-polished and subjected to conductive treatment with ultra-thin carbon to observe the microstructure of the cross-section. An FE-SEM (ULTRA 55, manufactured by Zeiss) was used for observation. Evaluation of the area ratio of voids was performed by the same method as in Example 1.

As a result, the film thickness of the composite ceramic of Sample 21 and Sample 22 was about 4 $\mu$m. However, the structure of the composite ceramic of these samples was different from each other. Sample 21 was dense and only 0.2% of voids in terms of area ratio was observed. On the other hand, in Sample 22, 4% of voids in terms of area ratio were confirmed. In the composite ceramic of each of Sample 21 and Sample 22, a composite film of a mixture of the silicon nitride phase and the zirconia phase was formed in the field of view for observation. However, in Sample 22, a portion of aggregated silicon nitride and zirconia particles was confirmed, and many voids were observed especially between the silicon nitride grains.

From the above, it was found that in a case in which a mixed powder is used as the raw material, it is important, for densification, to sufficiently mix the powder in terms of raw material particle level before forming an aerosol.

The area ratio of the silicon nitride phase and the zirconia phase in Sample 21 evaluated by the same method as in Example 1 using SEM images was 43.5% (silicon nitride phase) and 56.0% (zirconia phase), and the average particle size of the silicon nitride phase, which was the second phase and the toughening phase, was evaluated by the intersection method to be 0.066 $\mu$m in a film thickness direction and 0.114 $\mu$m in a direction parallel to the contact interface between the composite ceramic and the substrate.

In Sample 21, a flake-shaped sample was taken from a cross-section perpendicular to the contact interface between the composite ceramic and the substrate, and observed with a transmission electron microscope. The flake-shaped sample was prepared by an FIB microsampling method, and observed with an FE-TEM at an acceleration voltage of 200 kV. An overall photograph of the composite ceramic layered body is shown in Fig. 4. In other words, Fig. 4 shows a cross-sectional photograph of the composite ceramic layered body of Sample 21 observed with a transmission electron microscope. In the composite ceramic layered body 10 of Sample 21, the composite ceramic 11 is coated on the copper plate as the substrate 12. The reference 14 shown in Fig. 4 is the contact interface between the substrate 12 and the composite ceramic 11.

As shown in Fig. 4, it is found that a fine and dense composite ceramic coating is formed in Sample 21. In the composite ceramic 11 shown in Fig. 4, portions shown in bright contrast were mainly a phase of $\beta$-$Si_3N_4$, with a very slight amount of $\alpha$-$Si_3N_4$ observed. It was found, from diffraction spot analysis, that a phase shown by dark contrast is a phase of $ZrO_2$. Both particles are flattened in the film thickness direction. No voids were observed in the field of view. The reference 151 shown in Fig. 4 is the silicon nitride ($Si_3N_4$) phase, and the reference 161 is the zirconia ($ZrO_2$) phase.

As a result of observation by TEM at a magnification of 100,000 times, it was found that both the silicon nitride phase and the zirconia phase were composed of finer crystal grains within the particles observed by SEM. It was found that silicon nitride was composed of two portions, one of which was composed of crystal grains having a size of about from 0.1 $\mu$m to 0.2 $\mu$m and the other of which was composed of an assembly of particles having a size of tens of nm. On the other hand, the zirconia phase was composed of an assembly of particles having a size of from some nm to 20 nm, in which particles having a size of about from some 10 nm to 100 nm were partially confirmed. In other words, although the particle size measured by SEM is not a crystal grain size, cracks after the Vickers indenter was applied in each of Examples propagated along boundaries of particles observed by SEM in many cases. It is the particle size of the toughening phase observed by SEM that plays a major role in the mechanical properties, especially the fracture toughness.

At the interface of the silicon nitride phases, an amorphous phase of silicon oxide of a few nm was partially confirmed. Although a very slight amount of silicon oxide amorphous phase was also partially confirmed at the interface between the zirconia phases, crystalline phases other than the silicon nitride and zirconia phases were not confirmed.

Preparation of a dense composite ceramic composed of the silicon nitride phase and the zirconia phase is impossible by the sintering method. The reason why no tetragonal zirconia was confirmed, unlike the X-ray diffraction results, can be explained by the fact that the zirconia phase, which was transformed from monoclinic crystal to tetragonal crystal by a compressive stress of the film, returned to monoclinic crystal by releasing the stress during the preparation of the thin film sample. If this is the case, addition of raw material of monoclinic zirconia is considered to contribute to relaxation of compressive stress and improvement of fracture toughness of the film.

Silicon nitride and zirconia are materials with high strength and fracture toughness among engineering ceramics. In a thermal process, it is difficult to form a dense structure of a nitride phase and an oxide phase. However, the two phases with excellent mechanical properties are composited without undergoing a thermal process such as sintering, by which it is possible to form an insulating film with even better mechanical properties compared to a single-phase material of a nitride phase or an oxide phase.

(Example 3)

Here, as Example 3, an aerosol deposition method was used to prepare a composite ceramic layered body in which a composite ceramic using various combinations of silicon nitride, aluminum nitride, alumina, zirconia, yttria, ceria, and titania as a combination of the oxide or the nitride was coated on a steel plate as a substrate.

As the silicon nitride raw material powder used as the raw material, $\beta$-$Si_3N_4$ ($\alpha$ content of less than 5%), which contains less than 5% of $\alpha$-$Si_3N_4$, and $\alpha$-$Si_3N_4$, which contains almost no $\beta$-$Si_3N_4$, were used. Here, "almost no" means the degree to which a peak of $\beta$-$Si_3N_4$ cannot be detected as a result of measurement by a powder X-ray diffraction method. A corundum type $\alpha$-$Al_2O_3$ was used as alumina. As the zirconia raw material, partially stabilized zirconia that contains tetragonal and monoclinic zirconia, and contains yttrium as a stabilizer, was used. A reagent with a purity of 99.9% was used for each of yttria ($Y_2O_3$), ceria ($CeO_2$), aluminum nitride (AIN), and rutile type ($TiO_2$).

A commercially available $\beta$-$Si_3N_4$ has a larger particle size than that of other raw material powders. For this reason, a planetary ball mill was used in advance to knead $\beta$-$Si_3N_4$ with acetone as a medium for 20 hours to achieve the median diameter of 0.8 μm, and then the dried powder was used.

These raw material powders were then weighed in the ratio (mass ratio) shown in Table 2 and kneaded for 4 hours using a rolling ball mill with ethanol as a medium. A Teflon (registered trademark) pot and alumina balls were used. The size of the alumina balls was Φ5 mm. The powder obtained by kneading was heated to 150°C, and well-dried to be used as the raw material powder. Samples 31 to 33 were prepared using a single raw material for comparison. These were treated in a rolling ball mill under the same conditions in order to achieve the same particle size of the raw materials. The median diameters of the prepared raw material powders ranged from 0.4 μm to 0.8 μm.

[Table 2]

| Sample | Raw material median diameter (μm) | Raw material composition (% by mass) | | | | | | | |
|---|---|---|---|---|---|---|---|---|---|
| | | α-Si$_3$N$_4$ | β-Si$_3$N$_4$ | AlN | Al$_2$O$_3$ | ZrO$_2$ | Y$_2$O$_3$ | CeO$_2$ | TiO$_2$ |
| 31 | 0.48 | 100 | - | - | - | - | - | - | - |
| 32 | 0.75 | - | 100 | - | - | - | | - | - |
| 33 | 0.71 | - | - | - | 100 | - | - | - | - |
| 34 | 0.51 | 98.0 | - | - | 2.0 | - | - | - | - |
| 35 | 0.78 | - | 98.0 | - | 2.0 | - | - | - | - |
| 36 | 0.45 | 98.0 | - | - | 1.0 | - | 1.0 | - | - |
| 37 | 0.52 | 98.5 | - | - | - | 1.0 | - | - | - |
| 38 | 0.55 | 97.0 | - | - | - | 1.5 | - | - | - |
| 39 | 0.62 | 63.0 | - | - | - | 36.0 | - | 1.0 | - |
| 40 | 0.95 | - | - | 5.0 | 95.0 | - | - | - | - |
| 41 | 0.48 | 97.5 | - | - | - | - | - | - | 2.5 |

[Table 3]

| Sample | Film thickness (μm) | Cross-sectional area ratio (%) | | | | | | | |
|---|---|---|---|---|---|---|---|---|---|
| | | Si$_3$N$_4$ | AlN | Al$_2$O$_3$ | ZrO$_2$ | Y$_2$O$_3$ | CeO$_2$ | TiO$_2$ | Void |
| 31 | 15.6 | 98.1 | 0 | 0 | 0 | 0 | 0 | 0 | 1.2 |
| 32 | 30.1 | 99.4 | 0 | 0 | 0 | 0 | 0 | 0 | 0.2 |
| 33 | 40.7 | 0 | 0 | 99.7 | 0 | 0 | 0 | 0 | 0.2 |
| 34 | 39.1 | 97.1 | 0 | 2.3 | 0 | 0 | 0 | 0 | 0.3 |
| 35 | 35.9 | 97.6 | 0 | 2.1 | 0 | 0 | 0 | 0 | 0.2 |
| 36 | 51.1 | 97.6 | 0 | 1.1 | 0 | 1.0 | 0 | 0 | 0 |
| 37 | 38.9 | 98.0 | 0 | 0 | 0.9 | 0 | 0 | 0 | 0.3 |
| 38 | 42.3 | 97.8 | 0 | 0 | 1.3 | 0 | 0 | 0 | 0.1 |
| 39 | 54.6 | 72.7 | 0 | 0 | 25.9 | 0 | 1.2 | 0 | 0 |
| 40 | 38.9 | 0 | 7.0 | 92.7 | 0 | 0 | 0 | 0 | 0.1 |
| 41 | 38.1 | 97.6 | 0 | 0 | 0 | 0 | 0 | 2.0 | 0.3 |

[Table 4]

| Sample | Thickness direction particle size (μm) | Width direction particle size (μm) | Crack evaluation | Remarks |
|---|---|---|---|---|
| 31 | Not evaluated | Not evaluated | C | Comparative Example |
| 32 | Not evaluated | Not evaluated | B | Comparative Example |
| 33 | Not evaluated | Not evaluated | C | Comparative Example |
| 34 | 0.054 | 0.096 | B | Comparative Example |
| 35 | 0.058 | 0.110 | A | Example |
| 36 | 0.051 | 0.093 | A | Example |
| 37 | 0.061 | 0.105 | B | Comparative Example |
| 38 | 0.072 | 0.110 | A | Example |
| 39 | 0.091 | 0.150 | A | Example |
| 40 | 0.042 | 0.058 | A | Example |
| 41 | 0.041 | 0.061 | A | Example |

Next, a ceramic was formed on a steel substrate (STKM 13A) of 13 mm × 13 mm × 1 mmt (width × length × thickness) using each of these raw material powders. Specifically, an aerosol was formed by blowing 30 L/min. of nitrogen gas to the raw material powder in an aerosolization chamber, while vibrating the aerosolization chamber containing the raw material. The formed aerosol was transferred, using a pressure difference, from an upper portion of the aerosolization chamber to a deposition chamber that was connected with the upper portion by a pipe and was pressurized down to 250 Pa, and accelerated and jetted toward a 13 mm × 13 mm surface of the steel substrate as a substrate by a slit nozzle that was provided at the end of the pipe and had an opening size of 0.3 mm in the X-direction and 15 mm in the Y-direction, thereby carrying out deposition.

The driving speed of the substrate was 2 mm/s in the X direction, and the substrate was moved back and forth with a driving length of 15 mm. The substrate with a 13 mm × 13 mm substrate deposition surface was placed at the center of a 15 mm × 15 mm region through which the nozzle passes. The number of times of layering was 120. Thus, a ceramic layered body with a composite ceramic coating layered on the entire surface at one side of the 13 mm × 13 mm square steel substrate was prepared.

The constituent materials were identified by X-ray analysis of the deposition surface. The X-ray diffraction peaks of each sample were not observed except for the peaks of the raw material and the steel substrate used as the substrate. No peak of $\beta$-Si$_3$N$_4$ was observed in the film formed using $\alpha$-Si$_3$N$_4$ raw material powder. No peak of $\alpha$-Si$_3$N$_4$ was observed in the film formed using $\beta$-Si$_3$N$_4$ raw material powder. The peak of the zirconia indicated almost tetragonal crystal. Although the raw material zirconia contained yttrium, no peak of yttria was observed in the zirconia in the deposition surface. On the other hand, each of the composite ceramic films prepared using yttria, ceria, or titania as the raw material showed peaks of yttria, ceria, or titania.

For the prepared samples, a cross-section orthogonal to the contact interface between the steel substrate and the composite ceramic was mechanically polished and subjected to conductive treatment with ultra-thin carbon to observe the microstructure of the cross-section.

It was found that a ceramic film with a thickness of from 15 μm to 55 μm was formed on the surface of the copper substrate. The film thickness of the composite ceramic deposited using a mixed raw material that contained zirconia, yttria, or ceria as the oxide raw material particles was larger than that of the ceramic deposited with the silicon nitride powder singly, even when the content of the oxide was small. As can be seen in Sample 5 of Example 1, and Sample 31 and Sample 32 of Example 3, the nitride has a small deposition rate. On the other hand, zirconia and a rare-earth oxide have an effect of increasing the film deposition efficiency. In particular, a rare-earth oxide has an effect of significantly increasing the film deposition efficiency. In addition, use of a rare-earth oxide reduces the porosity and contributes to densification. On the other hand, in a case in which only $\alpha$-Si$_3$N$_4$ is used to carry out deposition, exfoliation from the substrate occurs as the film thickness is increased. The reason why the film thickness of the ceramic deposited

with only $\alpha$-Si$_3$N$_4$ was small was because the film thickness was evaluated at a portion where exfoliation occurred.

The proportion of each phase derived from each raw material and voids were determined by image processing from a magnification of 20,000 times of secondary electron image obtained by SEM at an acceleration voltage of 5 kV. After confirming each phase by EDS, the contrast and brightness of the SEM image were adjusted to distinguish each phase as a contrast. Then, the area ratio of each phase was calculated by image processing. An image taken at a magnification of 20,000 times and with a field of view of 56.6 $\times$ 42.5 $\mu$m was used for image processing. Crystal grains with a size of 0.01 $\mu$m were also identified. Image processing was carried out by using image processing software (Image Pro, manufactured by NIPPON ROPER K.K.) to separate and extract voids with a long diameter of 0.1 $\mu$m or more, and the area ratio of the voids was calculated. However, depending on the combination of respective phases, a clear contrast like the combination of silicon nitride and zirconia as described in Example 1 cannot be obtained. In a case in which the composite ceramic is a sample for which it is difficult to obtain a separate image of each phase from the SEM image, an observer artificially painted the phase with a marker to add contrast while referring to the composition analysis results by EDS.

The proportion of the cross-sectional area ratio shown in Table 3 is an average value from five images. The five images are five images at different observation locations. The reason why the area ratio of the sum of respective phases and voids does not reach 100% in some cases is due to a slight presence of voids having a long diameter of 0.1 $\mu$m or less and the error of image processing.

As shown in Table 3, from the area ratio (hereinafter, also referred to as cross-sectional area ratio) of a cross-section orthogonals to the contact interface between the composite ceramic and the substrate, the composite ceramic of each of Sample 34 to Sample 41 is as follows.

In Sample 34, the first phase is an $\alpha$-Si$_3$N$_4$ phase, and the second phase is an Al$_2$O$_3$ phase. The difference in Young's modulus between the $\alpha$-Si$_3$N$_4$ phase and the Al$_2$O$_3$ phase of the second phase is 9.5% in terms of the definition of the present disclosure.

In Sample 35, the first phase is a $\beta$-Si$_3$N$_4$ phase, and the second phase is an Al$_2$O$_3$ phase. The toughening phase of Sample 35 is Al$_2$O$_3$.

In Sample 36, the first phase is an $\alpha$-Si$_3$N$_4$ phase, the second phase is an Al$_2$O$_3$ phase, and the third phase is a Y$_2$O$_3$ phase. Since a phase that has an area ratio of 1% or more and has a largest difference in elastic modulus from an elastic modulus of the first phase is a toughening phase, the toughening phase of Sample 36 is the Y$_2$O$_3$ phase which has a Young's modulus lower than that of Al$_2$O$_3$ phase.

In Sample 37, the first phase is an $\alpha$-Si$_3$N$_4$ phase, and the second phase is a ZrO$_2$ phase. However, since an area ratio is less than 1%, no toughening phase is present in Sample 37.

In Sample 38, the first phase is an $\alpha$-Si$_3$N$_4$ phase, and the second phase is a ZrO$_2$ phase. Since an area ratio of the second phase is 1% or more, the toughening phase of Sample 36 is the ZrO$_2$ phase.

In Sample 39, the first phase is an $\alpha$-Si$_3$N$_4$ phase, the second phase is a ZrO$_2$ phase, and the third phase is a CeO$_2$ phase. Since a phase that has an area ratio of 1% or more and has a largest difference in elastic modulus from an elastic modulus of the first phase is a toughening phase, the toughening phase of Sample 36 is the CeO$_2$ phase which has a Young's modulus lower than that of the ZrO$_2$ phase.

In Sample 40, the first phase is an Al$_2$O$_3$ phase and the second phase is an AlN phase. The toughening phase of Sample 40 is the AlN phase.

In Sample 41, the first phase is an $\alpha$-Si$_3$N$_4$ phase, and the second phase is a TiO$_2$ phase. The toughening phase of Sample 41 is the TiO$_2$ phase.

The particle size of the toughening phase was measured as follows. First, a magnification of 30,000 times of secondary electron image of a cross-section orthogonal to the contact interface between the composite ceramic and the substrate was obtained by SEM. Next, a straight line parallel to and a straight line perpendicular to the contact interface between the substrate and the composite ceramic were drawn, respectively. Next, for each of the parallel and perpendicular lines, boundary locations at which the toughening phase and another phase intersect were marked. Next, for each of the directions parallel to and perpendicular to the contact interface between the substrate and the composite ceramic, a distance (distance of section) between marks of the second phase was converted into an actual length, and an average distance was calculated as the average particle size. The particle size shown in Table 4 is the average value of approximately 50 sections of the second phase. In Sample 34, since the relationship between the ratio of the Young's modulus of the second phase and the Young's modulus of the first phase is less than 10%, the second phase is not a toughening phase. In Sample 37, since the area ratio of the second phase is less than 1%, the second phase is not a toughening phase. However, for each of Samples 34 and 37, the particle size of the alumina phase or the zirconia phase that was the second phase was measured. In Table 4, the average particle size in a direction perpendicular to the contact interface is described as a thickness direction particle size, and the average particle size in a direction parallel to the contact interface is described as a width direction particle size.

The average particle size of the toughening phase of the composite ceramic was sub-micron size. The average particle size in the film thickness direction perpendicular to the contact interface between the composite ceramic and the substrate was smaller compared to the direction parallel to the contact interface. In other words, the particles appeared to be deformed in the film thickness direction.

In the composite ceramic, the second phase, or the third phase in some samples, was uniformly and finely dispersed in the first phase having the largest area ratio, and the grain boundaries were tightly bound except where voids were present. The grain boundaries of each phase were magnified up to 50,000 times, and no reaction phase was observed at the grain boundaries of each phase, and a phase other than substances used as the raw materials was not observed.

Then, an operation in which an indenter was pushed into a mirror-polished observation surface with a load of 50 gf, held for 15 seconds, and then lifted was repeated with a distance sufficient to avoid overlapping tips of cracks caused by the indenter. Since the indenter has a shape of square pyramid, an indentation is almost square in shape. The indenter was pushed in such a manner that one of the diagonals connecting the tops of the square indentation became perpendicular to the contact interface between the ceramic and the substrate, and the other of the diagonals became parallel to the contact interface between the ceramic and the substrate. After indentations were applied, the indentations and cracks were observed by FE-SEM. The number of indentations was seven.

In all of Samples 31 to 41, cracks were found to occur from, among the tops of the square indentation, two tops of the indentation on the diagonal line parallel to the contact interface between the ceramic and the substrate toward the outside of the indentation. On the other hand, in all of Samples 31 to 41, no cracks were found to occur from the tops of the indentation on the diagonal line in the thickness direction (accordingly, direction perpendicular to the contact interface between the composite ceramic and the substrate) of the substrate toward the thickness direction of the substrate. This indicates that cracks and extension thereof are unlikely to occur with respect to the thickness direction of the ceramic provided on the substrate. Therefore, it is indicated that the fracture toughness is higher in the direction perpendicular to the contact interface between the ceramic and the substrate. This is due to the following two effects. One effect is a structural effect in which the morphology of each phase is deformed in the direction parallel to the contact interface between the composite ceramic and the substrate, resulting in a structure in which cracks that extend between the phases are unlikely to develop. Another effect is a process effect due to a compressive stress of the coating that is applied in an in-plane direction parallel to the contact interface between the composite ceramic and the substrate.

On the other hand, cracks extending in a plane perpendicular to the thickness direction (accordingly, in a plane parallel to the contact interface between the composite ceramic and the substrate) were found to extend between or in the vicinity of crystal grains as observed mainly by SEM. In some of large particles with a particle size of more than 1 $\mu$m, cracks were observed to penetrate the inside of the particles. The length of the crack and the path of crack extension were different in some samples. The crack evaluation in Table 4 shows the results of the evaluation of the length of cracks that occurred in a direction parallel to the contact interface between the composite ceramic and the substrate. The crack evaluation in Table 4 was carried out in accordance with the same criteria as those presented in Example 1.

In Sample 31, in which an $\alpha$-$Si_3N_4$ single-phase ceramic was layered, large cracks appeared and the ceramic film was destroyed. In contrast, in Samples 37 and 38, in which zirconia was dispersed in $\alpha$-$Si_3N_4$, cracks remained within the film. In particular, in Sample 38, in which zirconia was dispersed at 1.3% in terms of cross-sectional area ratio, the crack introduction length was extremely small. This is because zirconia with different elastic modulus was dispersed in $\alpha$-$Si_3N_4$, by which the fracture toughness value was increased. In particular, Sample 39, in which the respective zirconia and ceria phases were composited at an area ratio of 25.9% and 1.2% had the smallest amount of crack introduction among the samples evaluated in Example 3 and had excellent mechanical properties.

From the results of Samples 34 and 38, in which the area ratio of the silicon nitride phase was the same degree, it was found that the addition of alumina to $\alpha$-$Si_3N_4$ was less effective for improving the fracture toughness compared to the addition of zirconia. This is thought to be because elastic modulus of $\alpha$-$Si_3N_4$ and alumina is close to each other. Furthermore, from the results of Samples 34 and 36, in which the area ratio of the silicon nitride phase was the same degree, Sample 36 with the alumina phase of 1.1% and the yttria phase of 1% showed superior fracture toughness compared to Sample 34. The reason why the fracture toughness of Sample 36 is superior to Sample 34 with the alumina phase of 2.3% is that yttria, which has a large difference in elastic modulus from $\alpha$-$Si_3N_4$, was added and the addition of yttria made the sample denser.

When comparing samples with a silicon nitride phase as the first phase, referring to the evaluation of the crack length of Samples 32, 34, and 35, the crack evaluation of Sample 35 with alumina added to $\beta$-$Si_3N_4$ was better than Sample 32. Therefore, it is found that an effect of adding alumina to $\beta$-$Si_3N_4$ is large. This is because the difference between the elastic modulus of $\beta$-$Si_3N_4$ and the elastic modulus of alumina is greater than the difference between the elastic modulus of $\alpha$-$Si_3N_4$ and the elastic modulus of alumina.

Sample 33, in which an alumina single-phase ceramic was layered was found to have large cracks, although not enough to destroy the ceramic film. On the other hand, in Sample 40, in which alumina was contained as the first phase and 7% of aluminum nitride of which Young's modulus differs from the Young's modulus of alumina by 19% was dispersed, the crack evaluation was favorable and the fracture toughness was greatly improved. The thermal conductivity of aluminum nitride is large, and the heat dissipation of the layered body is improved according to the composite rule.

In Sample 41, in which titania of which Young's modulus differs from the Young's modulus of $\alpha$-Si$_3$N$_4$ by 12.7% was dispersed, the crack evaluation was favorable. It was found, from the result of Sample 41, that an effect of adding titania to $\alpha$-Si$_3$N$_4$ could be obtained.

(Example 4)

The abrasion resistance of Samples 4, 31, 32, and 39, each of which contained the silicon nitride phase as the first phase, was evaluated. The abrasion resistance was evaluated as follows.

A tungsten carbide ball with a diameter of 5 mm was pressed against the ceramic coating on the ceramic layered body with a load of 9.8 N. The ball was reciprocated for a sliding distance of 6 mm, and the sliding was stopped when the total sliding distance reached 100 m. The depth of the abrasion mark after sliding was measured.

Sample 31, in which an $\alpha$-Si$_3$N$_4$ single-phase coating was deposited could not be evaluated since the ceramic coating peeled off before the total sliding distance reached 100 m. The average depths of the abrasion marks of Sample 4, Sample 32, and Sample 39 were 4.3 $\mu$m (Sample 4), 9.1 $\mu$m (Sample 32), and 2.1 $\mu$m (Sample 39), respectively. From these results, it was found that the abrasion resistance of the composite ceramic layered body in which the composite ceramic of the silicon nitride phase and the zirconia phase was layered was superior to the ceramic layered body in which the ceramic of the single-phase silicon nitride was layered. The reason why the abrasion resistance of Sample 39 was excellent is that $\alpha$-Si$_3$N$_4$, of which hardness is superior to $\beta$-Si$_3$N$_4$, was used as the first phase and zirconia and ceria were added, by which both the fracture toughness and the density of the composite ceramic were improved.

The references indicated in each drawing are as follows.

10    Composite ceramic layered body
11    Composite ceramic
12    Substrate
13    Coating material such as metal
14    Contact interface
15    Nitride phase
16    Oxide phase
17    Void
28    Line perpendicular to contact interface
29    Intersection of line perpendicular to contact interface and grain boundary
38    Line parallel to contact interface
39    Intersection of line parallel to contact interface and grain boundary

The disclosure of Japanese Patent Application No. 2018-071662 is incorporated herein by reference in its entirety.

All publications, patent applications, and technical standards mentioned in the present specification are incorporated herein by reference to the same extent as if such individual publication, patent application, or technical standard was specifically and individually indicated to be incorporated by reference.

**Claims**

1.  A composite ceramic layered body, comprising:

    a substrate; and
    a composite ceramic that coats the substrate, wherein:
    the composite ceramic is a composite material comprising a nitride phase and an oxide phase having an elastic modulus that differs from an elastic modulus of the nitride phase by 10% or more, a balance of the composite ceramic being impurities, wherein:

    in a cross-section orthogonal to a contact interface between the composite ceramic and the substrate, among the nitride phase and the oxide phase, a phase that occupies a largest area ratio is a first phase and a phase that occupies an area ratio of 1% or more and has a largest difference in elastic modulus from an elastic modulus of the first phase is a toughening phase, and
    in a case in which the first phase is the nitride phase, the toughening phase is the oxide phase, and in a case in which the first phase is the oxide phase, the toughening phase is the nitride phase.

2. The composite ceramic layered body according to claim 1, wherein, in the cross-section orthogonal to a contact interface between the composite ceramic and the substrate, voids having a long diameter of 0.1 $\mu$m or more are present in the composite ceramic at an area ratio of from 0% to 3%.

3. The composite ceramic layered body according to claim 1 or 2, wherein, in the cross-section orthogonal to a contact interface between the composite ceramic and the substrate, an average particle size of the toughening phase in a direction perpendicular to the contact interface is 1 $\mu$m or less.

4. The composite ceramic layered body according to any one of claims 1 to 3, wherein the first phase is a silicon nitride phase or an aluminum nitride phase.

5. The composite ceramic layered body according to any one of claims 1 to 3, wherein the first phase is a zirconia phase, an alumina phase, or a rare earth oxide phase.

6. The composite ceramic layered body according to claim 5, wherein a part of the zirconia phase has a tetragonal structure.

7. The composite ceramic layered body according to any one of claims 1 to 5, wherein a combination of the nitride phase and the oxide phase is: a combination of a silicon nitride phase and a zirconia phase; a combination of a silicon nitride phase and an alumina phase; a combination of a silicon nitride phase and a rare earth oxide phase; a combination of an aluminum nitride phase and a zirconia phase; a combination of an aluminum nitride phase and an alumina phase; or a combination of an aluminum nitride phase and a rare earth oxide phase.

8. The composite ceramic layered body according to claim 7, wherein a part of the zirconia phase has a tetragonal structure.

9. The composite ceramic layered body according to any one of claims 1 to 8, wherein the substrate is a metal substrate.

10. A method of manufacturing a ceramic layered body, the method comprising:

a step of preparing a mixed raw material wherein nitride raw material particles, and oxide raw material particles having an elastic modulus that differs from an elastic modulus of the nitride raw material particles by 10% or more, are mixed; and
a step of mixing a gas with the mixed raw material to produce an aerosol, and jetting the aerosol toward a substrate.

FIG. 1A

10A(10)

14

11

12

FIG. 1B

10B(10)

14

13

11

12

FIG. 1C

14

10C(10)

11

12

## FIG. 1D

10D(10)

14

11

12

## FIG. 2A

10A(10)

33   23   12   11   14

## FIG. 2B

10C(10)

23   33      12   11      14

## FIG. 3A

11

15      16

39

38

17

28   29

# FIG. 3B

# FIG. 4

**EP 3 778 989 A1**

| INTERNATIONAL SEARCH REPORT | International application No. |
|---|---|
| | PCT/JP2019/014860 |

**A. CLASSIFICATION OF SUBJECT MATTER**
Int.Cl. C23C24/04(2006.01)i

According to International Patent Classification (IPC) or to both national classification and IPC

**B. FIELDS SEARCHED**

Minimum documentation searched (classification system followed by classification symbols)
Int.Cl. C23C24/04

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-131992 A (SUMITOMO ELECTRIC INDUSTRIES, LTD.) 25 May 2006, paragraphs [0023], [0044]-[0045], [0097]-[0102] (Family: none) | 1-3, 5, 7, 9, 10 |
| Y | | 4-9 |
| X | JP 2011-131348 A (MITSUBISHI MATERIALS CORP.) 07 July 2011, paragraphs [0003], [0011], [0017]-[0027] (Family: none) | 1-3, 5, 9, 10 |
| Y | | 4-9 |
| X | JP 2003-127004 A (MMC KOBELCO TOOL KK) 08 May 2003, claims, paragraphs [0021]-[0022], [0032], [0039] (Family: none) | 1-4, 7, 9 |
| Y | | 4-9 |
| X | JP 2013-248691 A (MITSUBISHI MATERIALS CORP.) 12 December 2013, claims, paragraphs [0015], [0026], [0039] (Family: none) | 1-3, 5, 9 |
| Y | | 4-9 |
| Y | WO 2017/142090 A1 (NIPPON STEEL & SUMITOMO METAL CORPORATION) 24 August 2017, claims, paragraphs [0107]-[0141] & EP 3418428 A1(paragraphs [0117]-[0150], Claims) & KR 10-2018-0100429 A & CN 108603294 A & TW 201731688 A | 4-9 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 June 2019 (06.06.2019) | 18 June 2019 (18.06.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5924751 B
- JP H0813701 B
- JP 2018071662 A

**Non-patent literature cited in the description**

- **S. OGATA.** *Acta Meaterialia,* 2004, vol. 52, 233
- **L. K. I. FALK.** *J. Am. Ceram. Soc. 199,* vol. 75, 28
- **P. VINCENZINI.** *Ceramics Internatioanal,* 1986, vol. 12, 133